# EUROPEAN PATENT APPLICATION

(11) **EP 3 893 179 A1**
(43) Date of publication of application: **13.10.2021**
(21) Application number: 19892116.5
(22) Date of filing: 15.11.2019
(51) Int. Cl.: G06Q 20/36, G06Q 20/32, G06Q 20/06, G06Q 20/38, G06Q 20/40, G06F 21/32

(54) **DIGITAL VIRTUAL CURRENCY ISSUED BY BEING MATCHED WITH BIOMETRIC AUTHENTICATION SIGNAL, AND TRANSACTION METHOD THEREFOR**

(30) Priority: 07.12.2018 KR 20180156594; 01.02.2019 KR 20190013615
(71) Applicant: All It Top Co., Ltd., Seoul 01062 (KR)
(72) Inventor: CHOI, Sung Ho, Uiwang-si Gyeonggi-do 16054 (KR); SONG, Chung Ja, Uiwang-si Gyeonggi-do 16054 (KR); PARK, Dae Jin, Seoul 05501 (KR)
(74) Representative: Algemeen Octrooi- en Merkenbureau B.V.
(86) International application number: PCT/KR2019/015647
(87) International publication number: WO 2020/116813

(57) **Abstract**

The present disclosure relates to a digital virtual currency issued by matching the digital virtual currency with a biometric authentication signal, in which the digital virtual currency is formed so that fingerprint or finger vein authentication information matches with and is stored in each basic unit of a file of the virtual currency by a matching program (344), and thus sender's fingerprint or finger vein authentication information may be converted into recipient's fingerprint or finger vein authentication information by a blockchain-based digital virtual currency transaction guidance server (200), a sender terminal (300) is configured to determine whether the file of the virtual currency matches the fingerprint or finger vein authentication information, and the blockchain-based digital virtual currency transaction guidance server (200) determines whether there is a request for converting the sender's fingerprint or finger vein authentication information matching with and stored in the file of the virtual currency into the recipient's fingerprint or finger vein authentication information, and converts the sender's fingerprint or finger vein authentication information.

## Description

### [Technical Field]

The present disclosure relates to a digital virtual currency issued by matching the digital virtual currency with a biometric authentication signal and a transaction method thereof, and more particularly, to a digital virtual currency issued by matching the digital virtual currency with a biometric authentication signal, including a method of issuing a digital virtual currency transmitted by interlocking the digital virtual currency with the biometric authentication signal using biometric units of fingerprint/finger vein/iris/face recognition sensors and authentication information of a quick response (QR) (or bar) code to prevent a problem of security and hacking from occurring when transacting the digital virtual currency with a blockchain, and a transaction method thereof.

### [Background Art]

The present inventor filed a patent for a three dimensional (3D) stereoscopic imaging device as an authentication device for a fingerprint and a finger vein in accordance with Korean Patent Application No. 10-2016-46122 for technical matters applied as the gist of this patent application and filed patents for algorithms for a fingerprint and fingerprint, a fingerprint and finger vein, and a finger vein and finger vein in accordance with Korean Patent Application Nos. 10-2016-0153836, 10-2016-0157310, and 10-2016-0157311.

A transaction system of a digital virtual currency with a blockchain between parties, which is a background art to which these patents are applied, has also been patented with Korean Patent Registration Nos. 10-1673073 and 10-1628007.

That is, the bitcoin (BTC) (same concept as virtual currency) system was developed in 2009 by an individual programmer under the pseudonym Nakamoto Satoshi, or by a group of programmers, and basically depends on a peer to peer (P2P) based distributed database and does not depend on a specific computer or network. In a word, it means that individual computers or servers equipped with a BTC (same concept as virtual currency) program are all gathered to form a whole BTC (same concept as virtual currency) system.

A so-called BTC (same concept as virtual currency) is created through an act of mining (originally, mining means data mining, that is, information processing, but in Korea, it is commonly used to mean mining) in this system. Coins created in this way can be stored in a personal wallet and transacted. Currently, about 13.8 million BTCs(same concept as virtual currency) are mined and distributed, and 21 million BTCs are scheduled to be sequentially mined by 2140.

The most important word in the description of BTCs (same concept as virtual currency) is mining.

Mining is usually a way to get new BTCs (same concept as virtual currency). A process of making computers (terminals) constituting a BTC (same concept as virtual currency) network compete to find an operation value satisfying specific conditions to provide BTCs to a computer that finds the operation value first is called mining. However, the mining is not only a method of obtaining BTCs (same concept as virtual currency) but also serves to authenticate transactions of BTCs (same concept as virtual currency).

Currently, global companies that accept payments in BTCs (same concept as virtual currency) include DELL (computer), Microsoft (software), Expedia (the world's largest online travel agency), Braintree, a subsidiary of PayPal (payment), and the like. The number of global companies is growing rapidly. The general affiliate status may be found at http://coinmap.org.

A structure of crypto-currency will be described below.

Crypto-currencies represented by BTCs (same concept as virtual currency) have a common type of transaction ledger called blockchain.

As an overview, general users download a crypto-currency wallet program to their computers. Next, the users install the crypto-currency wallet program on their computers. Then, as the program runs, an operation of synchronizing (matching) the program with blockchain recorded on the network starts first. Since the data is tens of gigabytes, it usually takes 3 to 7 days. When the synchronization is over, users may create their own addresses (concept of an account in a bank) in their wallets and receive or transmit BTCs (same concept as virtual currency) through the addresses. In the case of BTCs (same concept as virtual currency), the address is a combination of 34-digit English (upper and lower case) starting with 1 and numbers (ex, 1MowqQrQJL5AeaDMpX35B6EiJ4qnXPJnFp)).

Here, all crypto-currencies running in a blockchain system, including BTCs (same concept as virtual currency), are composed of a pair of keys in the form that a user stage is a private key-public key (address). The public key corresponds to an account number of a bank and the private key corresponds to a password, which are a pair that only fit each other.

In the case of a BTC (same concept as virtual currency) QT program (user personal wallet program), the private key is encrypted using the user password and stored in the member computer.

In the case of a BTC (same concept as a virtual currency) exchange web wallet, the private key is encrypted using a user password or a server's SALT and stored in the server.

In any case, the existing method is a method of storing a private key in a server or a member computer.

In other words, there is a possibility that an exchange security-related insider who knows an encryption method can decrypt an encrypted private key stored in the server and use the private key secretly.

When a member inquires about his or her account through the exchange server, a balance registered and stored in a server database (DB) is displayed. The actual balance in the address is meaningless to the members. It takes about one hour to perform six confirmations for the actual transmission of normal BTCs (same concept as virtual currency). Therefore, in this way, it is impossible to perform a transaction act of buying and selling frequently in a short time.

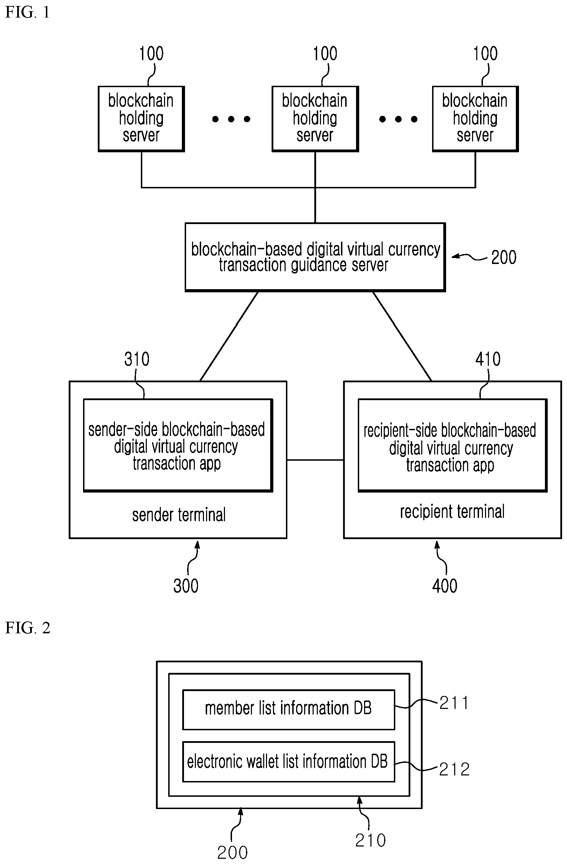

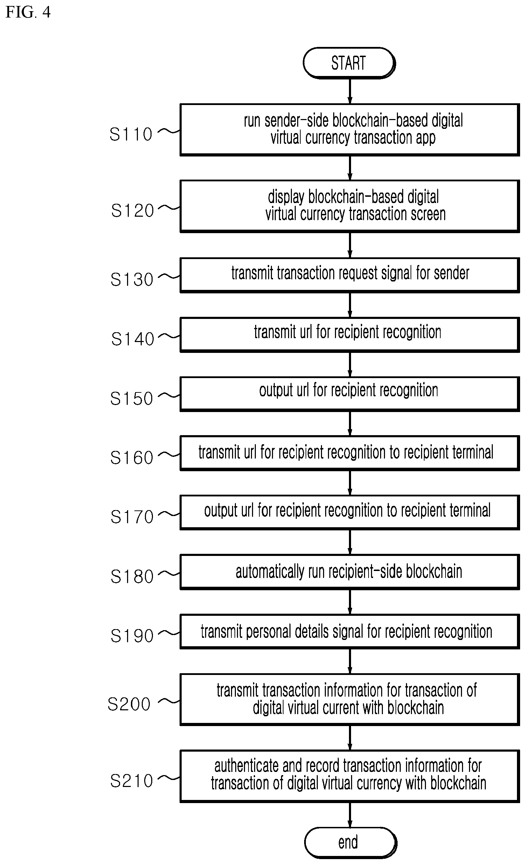

Looking at this, as illustrated in FIGS. 1 to 4, a transaction system of a digital virtual currency with a blockchain between parties of the present disclosure includes a plurality of blockchain holding servers 100, a blockchain-based digital virtual currency transaction guidance server 200, a sender terminal 300, and a recipient terminal 400.

First, the plurality of blockchain holding servers 100 are members that, when transaction information for transaction of a digital virtual currency with a blockchain is transmitted, verify the transmitted transaction information for the transaction of the digital virtual currency with the blockchain to authenticate a blockchain-based digital virtual currency transaction and are equipped with the blockchain in which the transaction information for the transaction of the digital virtual currency with the blockchain is recorded according to the authentication, and are a device that constitutes a P2P network-based distributed DB, that is, a BTC (same concept as virtual currency) network that performs the transaction of the digital virtual currency with the blockchain according to the authentication and recording for the transaction of the digital virtual currency with the blockchain upon the transaction of the digital virtual currency with the blockchain.

In the configuration of the blockchain holding server 100, the blockchain-based digital virtual currency transaction guidance server 200, which will be described below as being operated by the BTC (same concept as virtual currency) exchange, belongs as a single member.

In addition, the propagation of the transaction information for the transaction of the digital virtual currency with the blockchain is defined according to a communication protocol. Here, when the transaction information for the transaction of the digital virtual currency with the blockchain is generated, one node (here, referred to as a blockchain holding server) propagates the transaction information for the transaction of the digital virtual currency with the blockchain to the next designated eight nodes, and the transaction information for the transaction of the digital virtual currency with the blockchain is propagated to all the blockchain holding servers 100 equipped with the blockchain necessary to perform the transaction of the digital virtual currency with the blockchain through a pyramidal propagation in which the transaction information for the transaction of the digital virtual currency with the blockchain is repeatedly propagated to the next eight nodes designated for each of the eight nodes receiving the transaction information for the transaction of the digital virtual currency with the blockchain, and as a result, the propagation of the transaction information for the transaction of the digital virtual currency with the blockchain is completed.

Meanwhile, the blockchain holding servers 100 are equipped with the blockchain, and a server (or terminal) operated by a miner that mines a digital virtual currency with a blockchain, or a user terminal (for example, a personal computer (PC) or a smartphone) for transaction of a digital virtual currency with a blockchain may also be formed as a single member when an electronic wallet with blockchain is equipped.

Types of a digital virtual currency with a blockchain with such transaction characteristics include a BTC (same concept as virtual currency), a litecoin, a darkcoin, a namecoin, a dogecoin, a ripple, etc.

The blockchain-based digital virtual currency transaction guidance server 200 is a member that controls generation and transmission of a Uniform Resource Locator (URL) for recipient recognition (A) that guides to recognize a recipient who receives the digital virtual currency having the blockchain to be generated and transmitted when a transaction request signal for a sender is transmitted, deduct an amount that a sender wants to bestow to a recipient from amount information of a blockchain-based digital virtual currency held in a sender's electronic wallet when a personal details signal for recipient authentication is transmitted, generate transaction information for a digital virtual currency transaction composed of a transaction detail in which the deducted amount is accumulated in amount information of blockchain-based digital virtual currency of a recipient's electronic wallet, and propagate the generated transaction information for the digital virtual currency transaction to the blockchain holding servers 100. The blockchain-based digital virtual currency transaction guidance server 200 performs a function of guiding the transaction to be performed easily through the above-described URL for recipient recognition (A) without recognizing a public address composed of 32 bytes when transacting the digital virtual currency with the blockchain between the sender and recipient parties.

To this end, the blockchain-based digital virtual currency transaction guidance server 200 is equipped with a DB unit 210 that includes a member list information DB 211 in which member personal information including IDs, passwords, phone numbers including phone numbers of mobile communication terminals, and addresses of members as information registered by users when being signed up as a member for transaction of a blockchain-based digital virtual currency is stored separately for each member, and an electronic wallet list information DB 212 in which electronic wallets including public addresses, private keys, and amount information of blockchain-based digital virtual currencies opened by users who have signed up as a member is separately stored for each member.

In this way, the blockchain-based digital virtual currency transaction guidance server 200 serves to control deduction of an amount to be donated to the recipient from blockchain-based digital virtual currency amount information stored in electronic wallet information of the sender in an electronic wallet list information DB 212 after confirming that the recipient is a member by matching the personal information of the recipient included in the personal details signal for recipient authentication with a member list information DB 211 when the personal details signal for recipient authentication is transmitted from the recipient terminal 400, accumulate the deducted amount in the blockchain-based digital virtual currency amount information stored in the electronic wallet information of the recipient, generate transaction information for transaction of a digital virtual currency with a blockchain based on the accumulated amount, and propagate the generated transaction information for the transaction of the digital virtual currency with the blockchain to the blockchain holding servers 100.

In this way, a sender and a recipient possessing the sender terminal 300 and the recipient terminal 400 to be described below are subscribed to the blockchain-based digital virtual currency transaction guidance server 200 as members whose electronic wallets are managed.

The sender terminal 300 is a terminal member on which the sender-side blockchain-based digital virtual currency transaction app 310 is installed, in which the sender-side blockchain-based digital virtual currency transaction app 310 generates a transaction request signal for a sender that includes amount information on a digital virtual currency with a blockchain to be donated and personal information of a sender, transmits the generated transaction request signal for the sender to the digital virtual currency transaction guidance server 200, and designates a recipient and guides the URL for recipient recognition (A) transmitted from the digital virtual currency transaction guidance server 200 to be transmitted to the designated recipient.

Here, the sender-side blockchain-based digital virtual currency transaction app 310 is an application program and may be installed and used by downloading by accessing an app store through the sender terminal 300 or downloading by directly accessing the blockchain-based digital virtual currency transaction guidance server 200 described above.

In addition, the sender terminal 300 stores a blockchain-based digital virtual currency transaction screen 510 for inputting an amount of a digital virtual currency with a blockchain, selecting an instant messenger, or the like.

The blockchain-based digital virtual currency transaction screen 510 includes an amount display column 511 that displays an amount of a digital virtual currency with a blockchain to be donated, an instant messenger selection column 512 that displays instant messengers installed on the sender terminal 300 and selects a recipient-side instant messenger to which a sender is subscribed from among the displayed instant messengers, a text input column 513 that displays a message to be transmitted to a recipient, and a transmission menu 514 that requests data transmission.

In this way, when the transmission menu 514 of the blockchain-based digital virtual currency transaction screen 510 is clicked, the sender-side blockchain-based digital virtual currency transaction app 310 of the sender terminal 300 is programmed to generate a transaction request signal for a sender by collecting amount information of a digital virtual currency with a blockchain displayed through the amount display column 511, optional instant message (IM) identification information selected through the instant messenger selection column 512, and the stored and managed personal information of the sender.

The transaction process of the digital virtual currency with the blockchain between the parties using the transaction system of the digital virtual currency with the blockchain between the parties of the present disclosure which is configured as described above will be described as follows.

First, when a sender runs the sender-side blockchain-based digital virtual currency transaction app 310 installed on the sender terminal 300 (S110), the run sender-side blockchain-based digital virtual currency transaction app 310 controls the stored and managed blockchain-based digital virtual currency transaction screen 510 to be output and displayed through the information output unit 301 of the sender terminal 300 (S120).

When the transmission menu 514 is clicked in a state in which the sender inputs the digital virtual currency to the amount display column 511, the instant messenger selection column 512, and the text input column 513 on the displayed blockchain-based digital virtual currency transaction screen 510 through the information output unit 301 according to an input format, the sender-side blockchain-based digital virtual currency transaction app 310 generates a transaction request signal for a sender by collecting the amount information of the digital virtual currency, the optional IM identification information, and the stored and managed personal information of a sender input to the blockchain-based digital virtual currency transaction screen 510 through the sender-side blockchain-based digital virtual currency transaction app, and transmits the generated transaction request signal to the blockchain-based digital virtual currency transaction guidance server 200 (S130).

Thereafter, when the transaction request signal for the sender is transmitted from the sender terminal 300, the blockchain-based digital virtual currency transaction guidance server 200 generates a URL for recipient recognition (A) that guides to recognize a recipient who is bestowed the digital virtual currency with the blockchain after confirming that the sender is a member by matching the personal information of the sender included in the transaction request signal for the sender with the member list information DB 211 and transmitting the generated URL for recipient recognition (A) to the sender terminal 300 (S140).

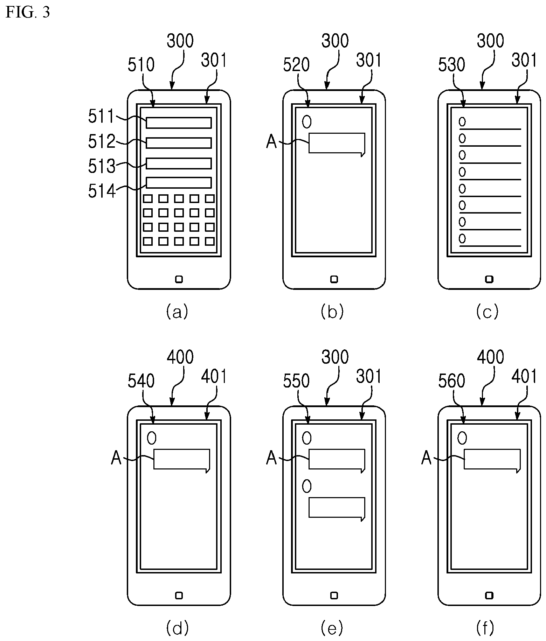

In a state in which the sender-side instant messenger corresponding to the optional IM identification information is controlled to be automatically run when the URL for recipient recognition (A) is transmitted from the blockchain-based digital virtual currency transaction guidance server 200, the sender-side blockchain-based digital virtual currency transaction app 310 of the sender terminal 300 controls a URL display guidance screen for a sender-side instant messenger (see FIG. 3B) with the URL for recipient recognition (A) displayed by being inserted into the automatically run sender-side instant messenger to be output through the information output unit 301 (S150).

Thereafter, when the recipient account of the instant messenger for the sender to request the transmission of the URL for recipient recognition (A) is designated by the sender designation guidance screen for the sender-side instant messenger (see FIG. 3C), the sender-side instant messenger of the sender terminal 300 transmits the URL for recipient recognition (A) to the recipient terminal 400 corresponding to the recipient account (S160).

Thereafter, the recipient-side instant messenger of the recipient terminal 400 controls a URL display guidance screen for a recipient-side instant messenger (see FIG. 3D) into which the transmitted URL for recipient recognition (A) is inserted and displayed to be output through the information output unit 401 (S170).

Thereafter, when the URL for recipient recognition (A) displayed on the recipient-side instant messenger of the recipient terminal 400 is clicked, the recipient-side blockchain-based digital virtual currency transaction app 410 is automatically run simultaneously with the click (S180).

The automatically run recipient-side blockchain-based digital virtual currency transaction app 410 of the recipient terminal 400 generates a personal details signal for recipient authentication including personal information of a recipient who is bestowed a digital virtual currency with a blockchain and transmits the generated personal details signal for recipient authentication to the digital virtual currency transaction guidance server 200 (S190).

Thereafter, the blockchain-based digital virtual currency transaction guidance server deducts an amount to be donated to the recipient from the blockchain-based digital virtual currency amount information stored in electronic wallet information of the sender in an electronic wallet list information DB 212 after confirming that the recipient is a member by matching the personal information of the recipient included in the personal details signal for recipient authentication with a member list information DB 211 when the personal details signal for recipient authentication is transmitted from the recipient terminal 400, accumulates the deducted amount in the blockchain-based digital virtual currency amount information stored in the electronic wallet information of the recipient, generates the transaction information for the transaction of the digital virtual currency with the blockchain based on the accumulated amount, and transmits the generated transaction information for the transaction of the digital virtual currency with the blockchain to the designated blockchain holding servers 100 (S200).

Thereafter, when the transaction information for the transaction of the digital virtual currency with the blockchain is transmitted, the authentication of the transaction is performed so that each designated blockchain holding server 100 verifies the transmitted transaction information for the transaction of the digital virtual currency with the blockchain to authenticate a blockchain-based digital virtual currency transaction and records the transaction information for the transaction of the digital virtual currency with the blockchain according to the authentication (S210).

Thereafter, the blockchain-based digital virtual currency transaction guidance server 200 transmits a message indicating that the sender terminal 300 has paid the digital virtual currency with blockchain to the recipient.

Thereafter, in the state in which the sender-side instant messenger corresponding to the optional IM identification information is controlled to be automatically run when a message is transmitted from the blockchain-based digital virtual currency transaction guidance server 200, the sender-side blockchain-based digital virtual currency transaction app 310 of the sender terminal 300 controls a payment confirmation guidance screen (see FIG. 3E) for a sender-side instant messenger with the message displayed by being inserted into the automatically run sender-side instant messenger to be output through the information output unit 301.

In addition, in the state in which the recipient-side instant messenger is controlled to be automatically run when the message is transmitted from the blockchain-based digital virtual currency transaction guidance server 200, the recipient-side blockchain-based digital virtual currency transaction app 410 of the recipient terminal 400 controls an accumulative storage guidance screen (see FIG. 3F) for a recipient-side instant messenger with a message displayed by being inserted into the automatically run recipient-side instant messenger to be output through the information output unit 401.

However, the transaction system of digital virtual currency with the blockchain between the parties described above has a problem in the security and hacking of the BTC (same concept as virtual currency), when each unique address, that is, a public address and a private key corresponding to a password, is lost.

In addition, it takes about one hour to perform six confirmations for the actual transmission of the BTC. Therefore, in this way, it is impossible to perform a transaction act of buying and selling frequently in a short time.

### [Disclosure]

### [Technical Problem]

Therefore, an object of the present disclosure is to propose a transaction method of a digital virtual currency that transmits the digital virtual currency by interlocking the digital virtual currency with a biometric authentication signal to prevent a problem of transmission or security and hacking of a virtual currency without ownership from occurring by authentication unit even when a unique address, that is, a public address and a private key corresponding to a password of a transaction system of a digital virtual currency with a blockchain between parties is lost.

In addition, an object of the present disclosure is to interlock a fingerprint with other digital electrical signals by allowing different types of fingerprint conversion devices to separate ridges and valleys of a fingerprint when the fingerprint is touched, not by relying on binary data output as a digital electrical signal.

In addition, an object of the present disclosure is to interlock an image of a capillary vessel of a finger with other digital electrical signals by allowing different types of finger vein conversion devices to split a screen of an image of the capillary vessel of the finger acquired through a preprocessor that visualizes the image of the capillary vessel into a matrix block, not by relying on binary data output as digital electrical signals for each block according to the presence or absence of the split image of the capillary vessel.

In addition, an object of the present disclosure is to interlock an iris image with other digital electrical signals by allowing different types of iris conversion devices to divide one iris image into individual pixels and prevent each pixel from relying on binary data output as a digital electrical signal according to the presence or absence of an iris pattern.

In addition, an object of the present disclosure is to interlock a face image with other digital electrical signals by allowing different types of face conversion devices to divide one face image into individual pixels according to a normalization of the face image based on feature points of an eye position and detailed information around the eye, not by relying binary data output as a digital electrical signal.

As a result, an object of the present disclosure is to propose a transaction method of a digital virtual currency that transmits the digital virtual currency by interlocking the digital virtual currency with a biometric authentication signal to clarify an owner of the virtual currency, prevent others from using the virtual currency by an authentication unit even when a unique address, that is, a public address and a private key corresponding to a password of a transaction system of a digital virtual currency with a blockchain between parties is lost, and allow a transaction to be made only by personal biometric authentication for transmission, security, and hacking of the virtual currency.

### [Technical Solution]

There is provided a digital virtual currency issued by matching the digital virtual currency with a biometric authentication signal, in which the digital virtual currency is formed so that fingerprint or finger vein authentication information matches with and is stored in each basic unit of a file of the virtual currency for each basic unit by a matching program (344), and thus, sender's fingerprint or finger vein authentication information may be converted into recipient's fingerprint or finger vein authentication information by a blockchain-based digital virtual currency transaction guidance server (200), a sender terminal (300) is configured to determine whether the file of the virtual currency matches the fingerprint or finger vein authentication information, and the blockchain-based digital virtual currency transaction guidance server (200) determines whether there is a request for converting the sender's fingerprint or finger vein authentication information matching with and stored in the file of the virtual currency into the recipient's fingerprint or finger vein authentication information, and converts the sender's fingerprint or finger vein authentication information.

The fingerprint or finger vein authentication information may be iris or face authentication information using a digital signal.

There is provided a transaction method of a digital virtual currency issued by matching the digital virtual currency with a biometric authentication signal, which is a transaction method of a crypto-currency with a blockchain structure, in which transmission records performed in a network are collected and encrypted, without a currency issuing subject, the transaction method including: an app or web running step (S110) of running, by a sender terminal (300), an installed sender-side blockchain-based digital virtual currency transaction app (310) or hybrid web according to a sender's selection; an information output unit displaying step (S120) of controlling the sender-side blockchain-based digital virtual currency transaction app (310) run by the sender terminal (300) to output and display a stored and managed blockchain-based digital virtual currency transaction screen (510) through an information output unit (301); with respect to the digital virtual currency formed so that fingerprint or finger vein authentication information matches with and is stored in each basic unit of a file of the virtual currency by a matching program (344), and thus, sender's fingerprint or finger vein authentication information may be converted into recipient's fingerprint or finger vein authentication information by a blockchain-based digital virtual currency transaction guidance server (200), a fingerprint or finger vein authentication information matching determination step (S130a) of determining, by the sender terminal (300), whether the file of the virtual currency matches the fingerprint or finger vein authentication information; when a transmission menu (514) is clicked in a state in which the sender terminal 300 inputs the digital virtual currency to an amount display column (511), an instant messenger selection column (512), and a text input column (513) on the displayed blockchain-based digital virtual currency transaction screen (510) through the information output unit (301) according to an input format, a blockchain-based digital virtual currency transaction guidance transmitting step (S130) of collecting, by the sender-side blockchain-based digital virtual currency transaction app (310), amount information of the digital virtual currency, optional instant message (IM) identification information, and stored and managed personal information of a sender input to the blockchain-based digital virtual currency transaction screen (510) to generate a transaction request signal for the sender and transmitting the generated transaction request signal to the blockchain-based digital virtual currency transaction guidance server (200); a digital virtual currency transaction guidance transmitting step (S190) of generating, by an automatically run recipient-side blockchain-based digital virtual currency transaction app (410) of a recipient terminal (400), a personal details signal for recipient authentication including personal information of a recipient who is bestowed a digital virtual currency with a blockchain and transmitting the generated personal details signal for recipient authentication to the digital virtual currency transaction guidance server (200); when the personal details signal for recipient authentication is transmitted from the recipient terminal (400), a digital virtual currency transaction information transmitting step (S200) of deducting, by the blockchain-based digital virtual currency transaction guidance server (200), an amount to be donated to the recipient from blockchain-based digital virtual currency amount information stored in electronic wallet information of the sender in an electronic wallet list information DB (212) after confirming that the recipient is a member by matching the personal information of the recipient included in the personal details signal for recipient authentication with a member list information DB (211), accumulating the deducted amount in the blockchain-based digital virtual currency amount information stored in the electronic wallet information of the recipient, generating transaction information for transaction of the digital virtual currency with the blockchain based on the accumulated amount, and transmitting the generated transaction information for the transaction of the digital virtual currency with the blockchain to designated blockchain holding servers 100; with respect to the digital virtual currency formed so that the fingerprint or finger vein authentication information matches with and is stored in each basic unit of the file of the virtual currency for each basic unit by the matching program (344), and thus, the sender's fingerprint or finger vein authentication information may be converted into the recipient's fingerprint or finger vein authentication information by the blockchain-based digital virtual currency transaction guidance server (200), a sender-recipient's fingerprint or finger vein authentication information converting step (S210a) of determining, by the blockchain-based digital virtual currency transaction guidance server (200), whether there is a request for converting the sender's fingerprint or finger vein authentication information matching with and stored in the file of the virtual currency into the recipient's fingerprint or finger vein authentication information, and converting the sender's fingerprint or finger vein authentication information; and when the transaction information for the transaction of the digital virtual currency with the blockchain is transmitted, a transaction authentication step (S210) of performing authentication of transaction by verifying, by each designated blockchain holding server (100), the transmitted transaction information for the transaction of the digital virtual currency with the blockchain to authenticate a blockchain-based digital virtual currency transaction and recording the transaction information for the transaction of the digital virtual currency with the blockchain according to the authentication.

The transaction method may further include: after the blockchain-based digital virtual currency transaction guidance transmitting step (S130), when the transaction request signal for the sender is transmitted from the sender terminal (300), a recipient recognition (A) Uniform Resource Locator (URL) transmitting step (S140) of generating, by the blockchain-based digital virtual currency transaction guidance server (200), a URL for recipient recognition (A) that guides to recognize the recipient who is bestowed the digital virtual currency with the blockchain after confirming that the sender is a member by matching the personal information of the sender included in the transaction request signal for the sender with the member list information DB (211), and transmitting the generated URL for recipient recognition (A) to the sender terminal (300); in a state in which the sender-side instant messenger corresponding to the optional IM identification information is controlled to be automatically run when the URL for recipient recognition (A) is transmitted from the blockchain-based digital virtual currency transaction guidance server (200), a sender-side instant messenger URL display guidance screen outputting step (S150) of controlling, through the sender-side blockchain-based digital virtual currency transaction app (310) of the sender terminal (300), a URL display guidance screen for a sender-side instant messenger with the URL for recipient recognition (A) displayed by being inserted into the automatically run sender-side instant messenger to output through the information output unit (301); when a recipient account of an instant messenger for the sender to request the transmission of the URL for recipient recognition (A) is designated through a sender designation guidance screen for the sender-side instant messenger, a recipient recognition (A) URL transmitting step (S160) of transmitting, by the sender-side instant messenger of the sender terminal 300, the URL for recipient recognition (A) to the recipient terminal 400 corresponding to the recipient account; a recipient-side instant messenger URL display guidance screen outputting step (S170) of controlling, by the recipient-side instant messenger of the recipient terminal (400), the URL display guidance screen for the recipient-side instant messenger into which the transmitted URL for done recognition (A) is inserted and displayed to output through the information output unit (401); and when the URL for recipient recognition (A) displayed on the recipient-side instant messenger of the recipient terminal (400) is clicked, an app auto-running step (S180) of automatically running the recipient-side blockchain-based digital virtual currency transaction app 410 simultaneously with the click.

The fingerprint or finger vein authentication information may be iris or face authentication information using a digital signal.

There is provided with a digital virtual currency issued by matching the digital virtual currency with a quick response (QR) (or bar) code, in which the digital virtual currency is formed so that QR (or bar) code authentication information matches with and is stored in a file of the virtual currency in each basic unit by a matching program (344), and thus, sender's QR (or bar) code authentication information is converted into recipient's QR (or bar) code authentication information by a blockchain-based digital virtual currency transaction guidance server (200), a sender terminal (300) is configured to determine whether the file of the virtual currency matches the QR (or bar) code authentication information, and the blockchain-based digital virtual currency transaction guidance server (200) determines whether there is a request for converting the sender's QR (or bar) code authentication information matching with and stored in the file of the virtual currency into the recipient's QR (or bar) code authentication information, and converts the sender's OR (or bar) code authentication information.

### [Advantageous Effects]

As described above, according to the present disclosure, a transaction method of a digital virtual currency that transmits the digital virtual currency by interlocking the digital virtual currency with a biometric authentication signal can transmit the virtual currency by matching the virtual currency with biometric information even when a unique address, that is, a public address and a private key corresponding to a password of a transaction system of a digital virtual currency with a blockchain between parties, is lost, prevent a transaction request signal for a sender from being transmitted when the authentication signal based on the biometric information is not input, or prevent a recipient-side blockchain-based digital virtual currency transaction app from being automatically run, thereby obtaining a great effect on the security and hacking prevention of bitcoin (same concept as virtual currency).

In addition, according to the present disclosure, it is possible to interlock a fingerprint with other digital electrical signals by allowing a fingerprint conversion device to separate ridges and valleys of a fingerprint when the fingerprint is touched and convert the ridges and valleys of the fingerprint based on binary data output as a digital electrical signal.

In addition, according to the present disclosure, it is possible to interlock an image of a capillary vessel of a finger with other digital electrical signals by allowing a finger vein conversion device to split a screen of the image of the capillary vessel of the finger acquired through a preprocessor that visualizes the image of the capillary vessel into a matrix block and convert the split image screen based on binary data output as digital electrical signals for each block according to the presence or absence of the split image of the capillary vessel.

In addition, according to the present disclosure, it is possible to interlock an iris image with other digital electrical signals by allowing an iris conversion device to divide one iris image into individual pixels and convert each pixel based on binary data output as a digital electrical signal according to the presence or absence of an iris pattern.

In addition, according to the present disclosure, it is possible to interlock a face image with other digital electrical signals using a face conversion devices to divide one face image into individual pixels according to a normalization of the face image based on feature points of an eye position and detailed information around the eye and converting each pixel based on binary data output as a digital electrical signal.

### [BRIEF DESCRIPTION OF THE DRAWINGS]

FIG. 1 is an overall configuration diagram illustrating a transaction system of a digital virtual currency with a blockchain between parties according to the conventional invention.
FIG. 2 is a block configuration diagram illustrating a database (DB) unit installed on a blockchain-based digital virtual currency transaction guidance server among the configurations of the transaction system of the digital virtual currency with the blockchain between the parties according to the conventional invention.
FIG. 3A is a diagram illustrating a blockchain-based digital virtual currency transaction screen (510) stored in a sender terminal among the configurations of the transaction system of the digital virtual currency with the blockchain between the parties according to the conventional invention.
FIG. 3B is a diagram illustrating a Uniform Resource Locator (URL) display guidance screen (520) for a sender-side instant messenger displayed on the sender-side instant messenger on a sender terminal in which a URL for recipient recognition of the conventional invention is equipped.
FIG. 3C is a diagram illustrating a sender designation guidance screen (530) for a sender-side instant messenger for selecting a sender on the sender-side instant messenger installed on the sender terminal of the conventional invention.
FIG. 3D is a diagram illustrating a URL display guidance screen (540) for recipient-side instant messenger in which the URL for recipient recognition is displayed on the recipient-side instant messenger installed on the recipient terminal of the conventional invention.
FIG. 3E is a diagram illustrating a payment confirmation guidance screen (550) for a sender-side instant messenger displaying that a recipient has received the digital virtual currency with the blockchain on the sender-side instant messenger installed on the sender terminal of the conventional invention.
FIG. 3F is an accumulative storage guidance screen (560) for a recipient-side instant messenger guiding that a digital virtual currency with a blockchain sent to a recipient's electronic wallet by the sender is accumulated and stored on the recipient-side instant messenger installed on the recipient terminal of the conventional invention.
FIG. 4 is a flowchart illustrating execution of a transaction process of a digital virtual currency with a blockchain between parties using the transaction system of the digital virtual currency with the blockchain between the parties according to the conventional invention.
FIG. 5 is a block diagram of matching a virtual currency having fingerprint/finger vein authentication information using a transaction system of a digital virtual currency with a blockchain between parties according to the present disclosure.
FIG. 6 is a block diagram illustrating execution of a transaction process of a digital virtual currency with a blockchain between parties using the transaction system of the digital virtual currency with the blockchain between the parties according to the present disclosure.
FIGS. 7A and 7B are flowcharts illustrating the execution of the transaction process of the digital virtual currency with the blockchain between the parties using the transaction system of the digital virtual currency with the blockchain between the parties according to the present disclosure.
FIG. 8 is a diagram conceptually illustrating an image acquisition mechanism of a finger vein and a finger fingerprint of an authentication device according to an embodiment of the present disclosure.
FIG. 9 is a diagram illustrating an example of an internal electronic configuration of the authentication device of the present disclosure.
FIG. 10 shows perspective views of a finger fingerprint surface (see FIG. 10A) and a finger side surface (see FIG. 10B) of the same finger photographed by a finger vein image sensor and a finger fingerprint image sensor.

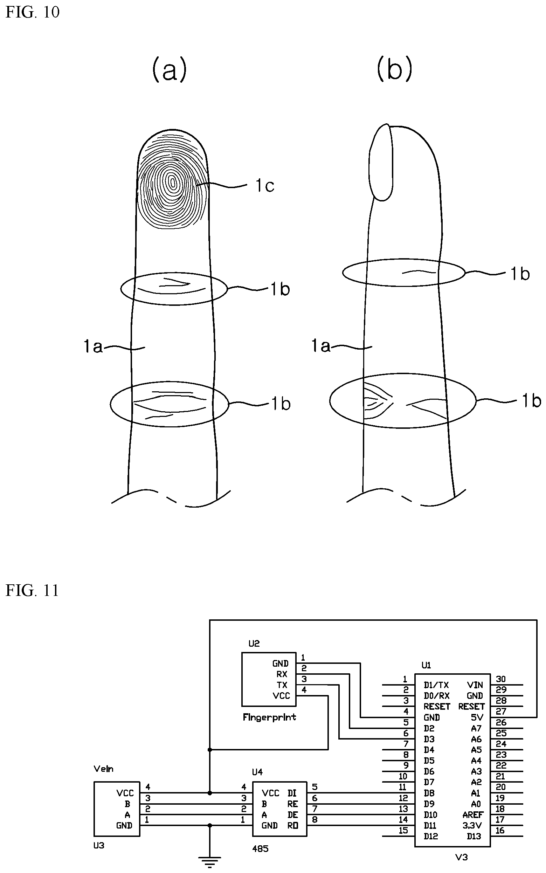

FIG. 10 shows diagrams separately illustrating images of fingerprints and finger veins for two fingers of the present disclosure.
FIG. 11 is a diagram illustrating an input/output integrated module interlocking fingerprint and finger vein algorithms.

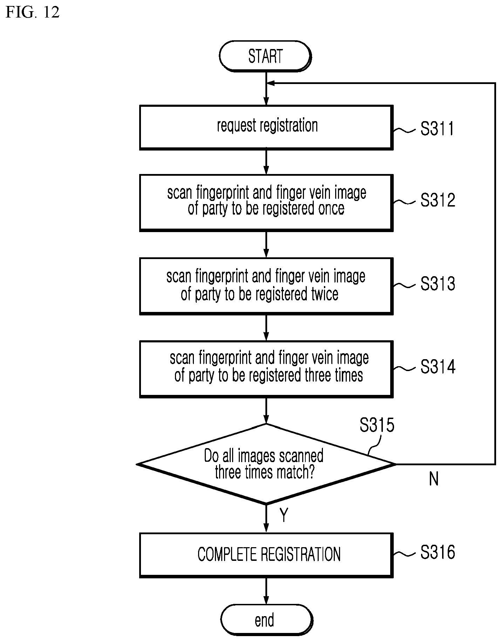

FIG. 12 is a flowchart for requesting a registration of a fingerprint and a finger vein.

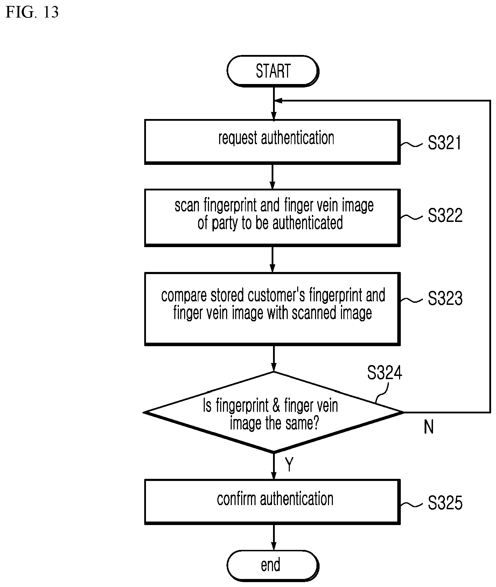

FIG. 13 is a flowchart for requesting an authentication of the fingerprint and the finger vein.

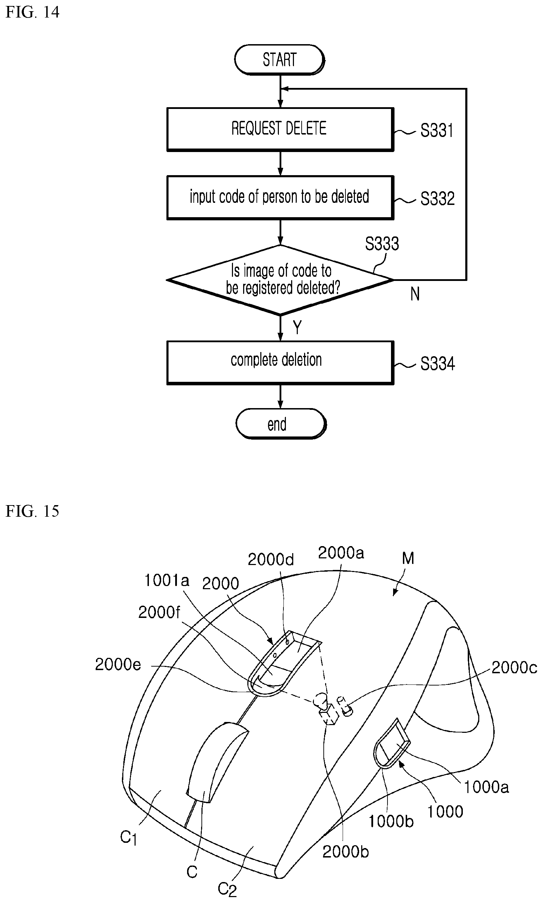

FIG. 14 is a flowchart for requesting a deletion of the fingerprint and the finger vein.
FIG. 15 is a schematic perspective view of a mouse authenticated by fingerprint 1, fingerprint 2, and the finger vein applied to the present disclosure.

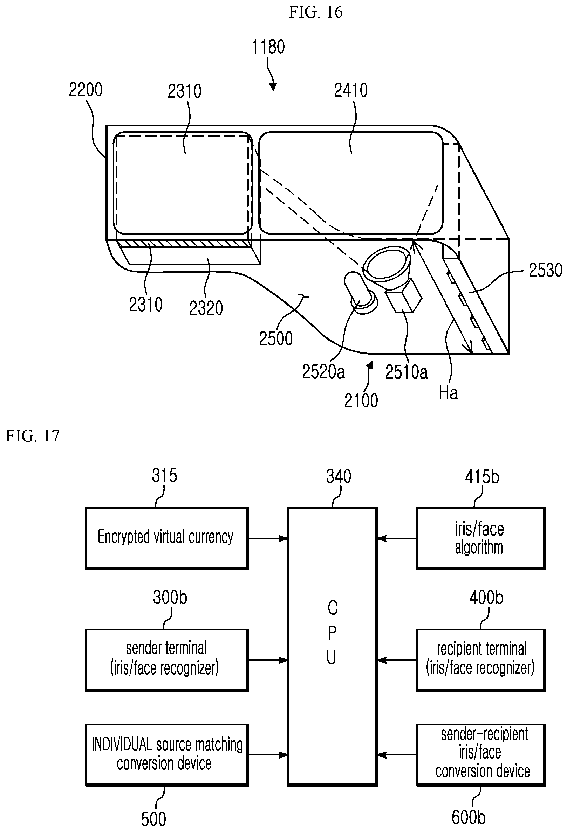

FIG. 16 is an exemplary configuration diagram of a fingerprint and/or finger vein photographing authentication device according to an embodiment of the present disclosure.
FIG. 17 is a block diagram of matching a virtual currency having iris/face authentication information using the transaction system of the digital virtual currency with the blockchain between the parties of the present disclosure.

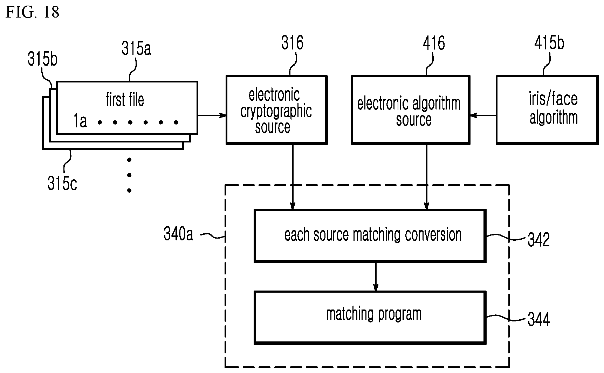

FIG. 18 is a block diagram illustrating execution of a transaction process of a digital virtual currency with a blockchain between parties using the transaction system of the digital virtual currency with the blockchain between the parties according to the present disclosure.

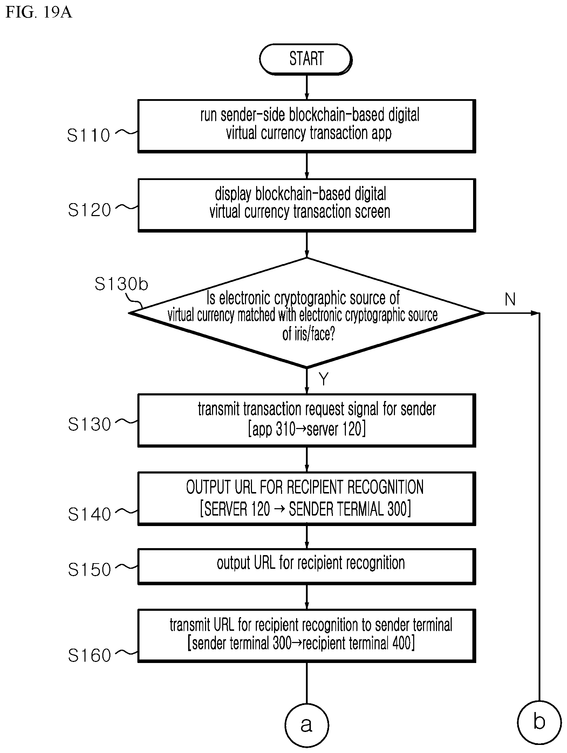

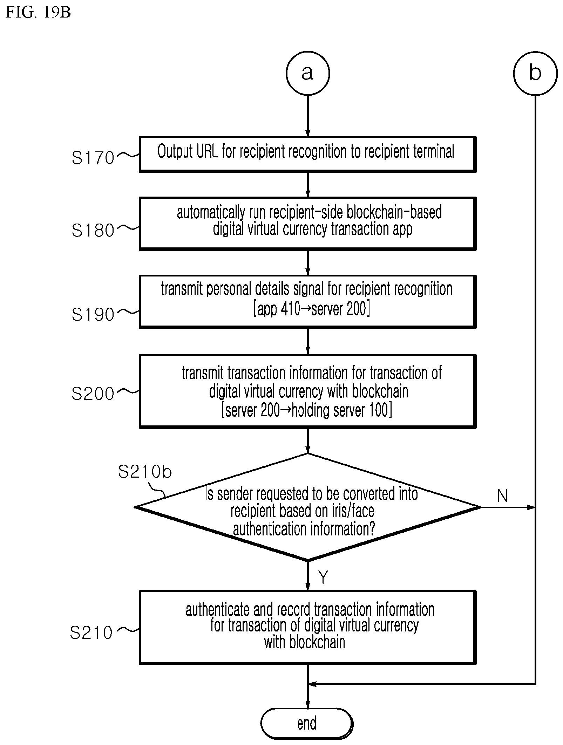

FIGS. 19A and 19B are flowcharts illustrating the execution of the transaction process of the digital virtual currency with the blockchain between the parties using the transaction system of the digital virtual currency with the blockchain between the parties according to the present disclosure.

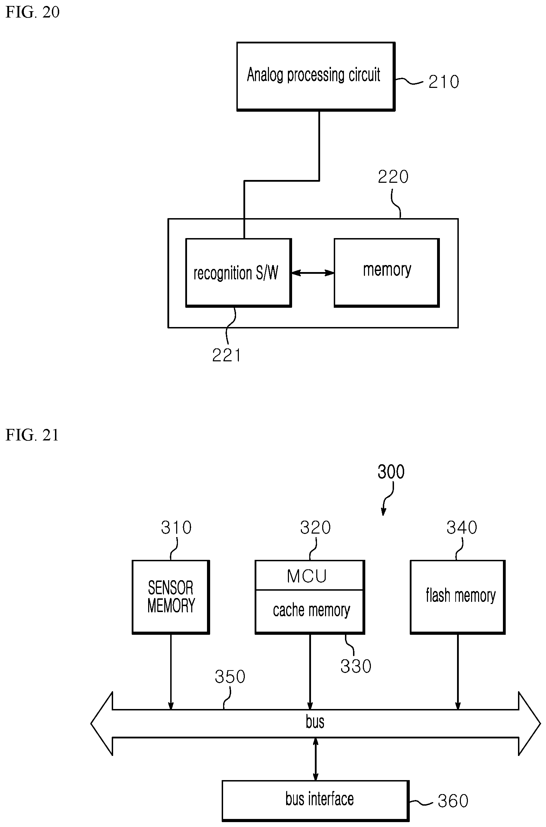

FIG. 20 is a block diagram illustrating a configuration of a fingerprint recognition device to which an analog processing circuit and a digital processing circuit according to a conventional first fingerprint invention applied to the present disclosure are applied.
FIG. 21 is a block diagram illustrating a configuration of a single chip fingerprint recognition device according to a conventional second fingerprint invention applied to the present disclosure.

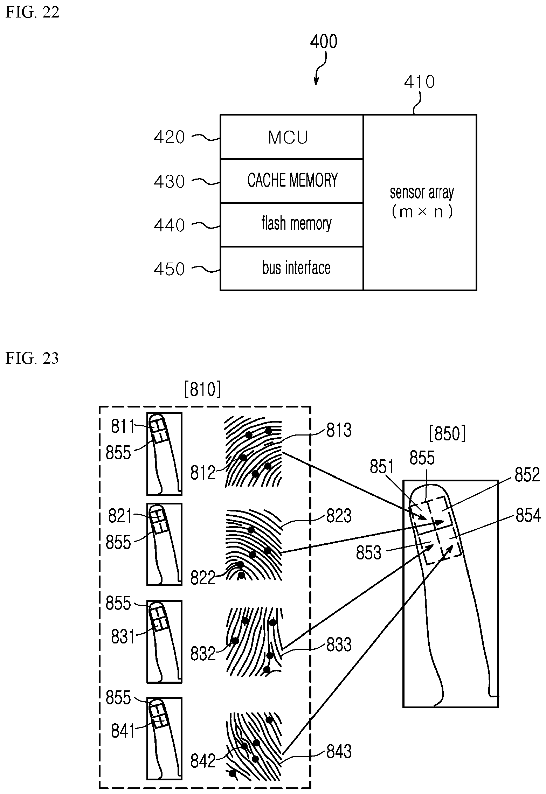

FIG. 22 is a block diagram illustrating an implementation example of the single chip of the fingerprint recognition device according to the conventional second fingerprint invention applied to the present disclosure.
FIG. 23 is an exemplary diagram illustrating a fingerprint recognition comparison using a specific point according to a conventional third fingerprint invention applied to the present disclosure.

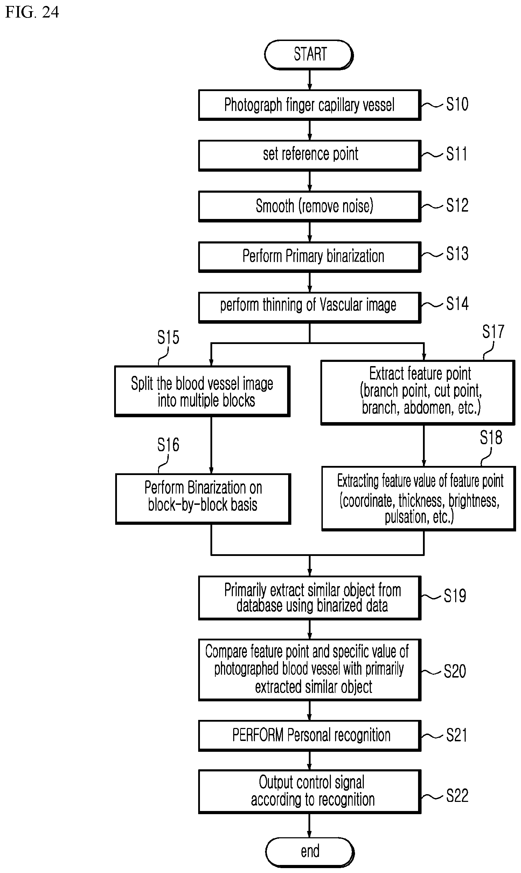

FIG. 24 is a flowchart illustrating an operation process of a biometric recognition security device according to an embodiment of the conventional finger vein invention applied to the present disclosure.

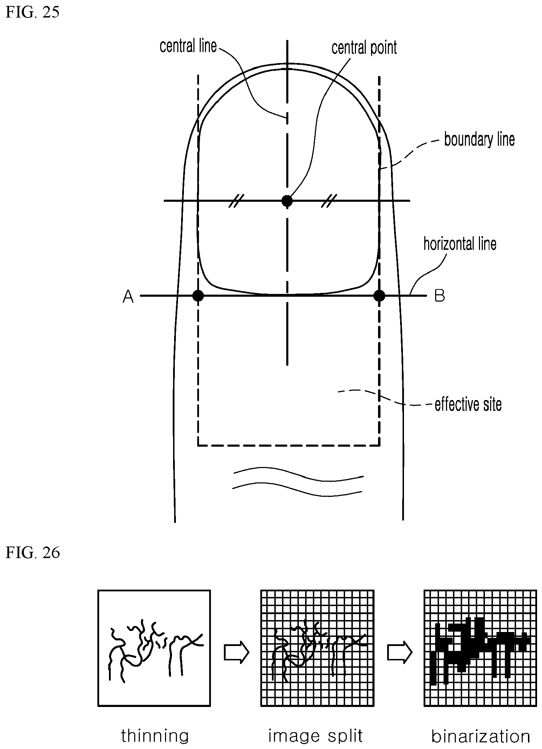

FIG. 25 is a diagram for describing setting of a reference point of an effective site when photographing a capillary vessel of the conventional finger vein invention applied to the present disclosure.
FIG. 26 is a diagram for describing an image segmentation and binarization process of a preprocessor of the conventional finger vein invention applied to the present disclosure.

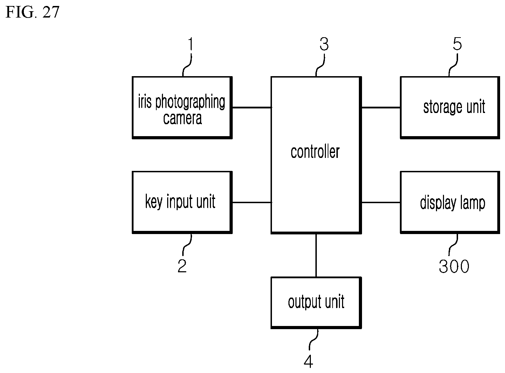

FIG. 27 is a block configuration diagram illustrating an iris recognition device using a short-range iris photographing camera according to an embodiment of the conventional iris invention applied to the present disclosure.

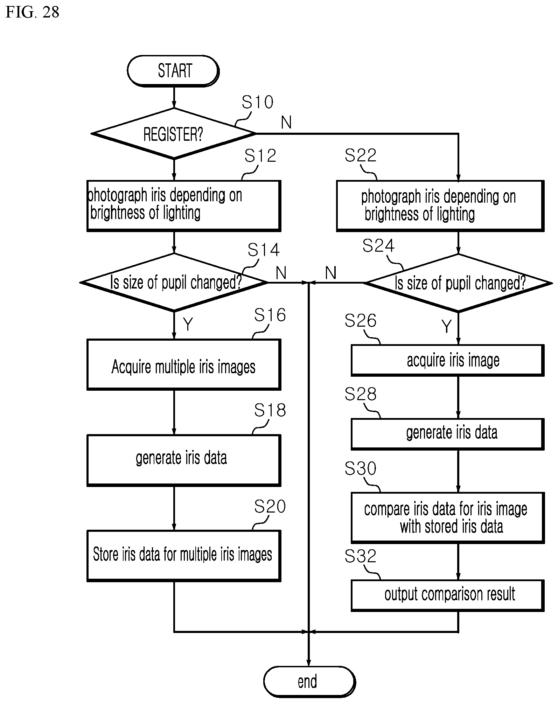

FIG. 28 is a flowchart for describing an iris recognition method using a short-range iris photographing camera according to an embodiment of the conventional iris invention applied to the present disclosure.

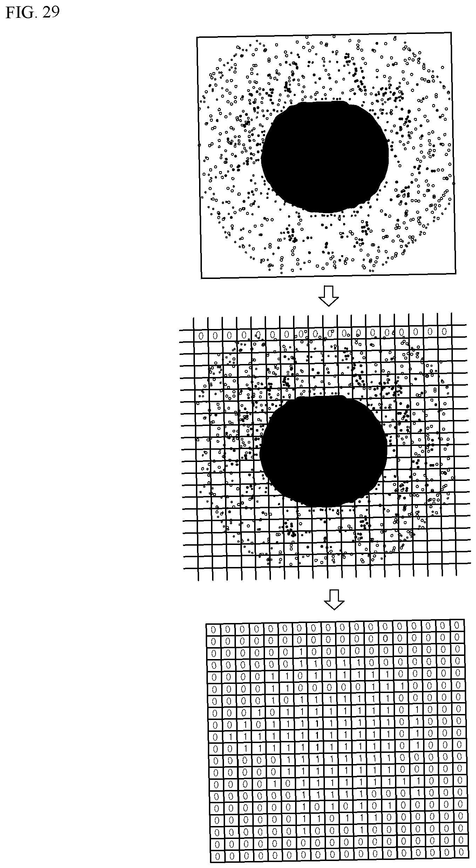

FIG. 29 is a diagram for describing a normalization method using binary data in the iris recognition method using the short-range iris photographing camera according to the embodiment of the conventional iris invention applied to the present disclosure.

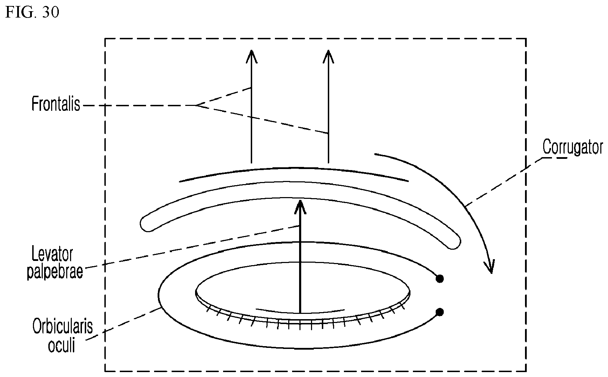

FIG. 30 is an explanatory diagram of a muscle structure of an eye of the conventional face invention applied to the present disclosure.

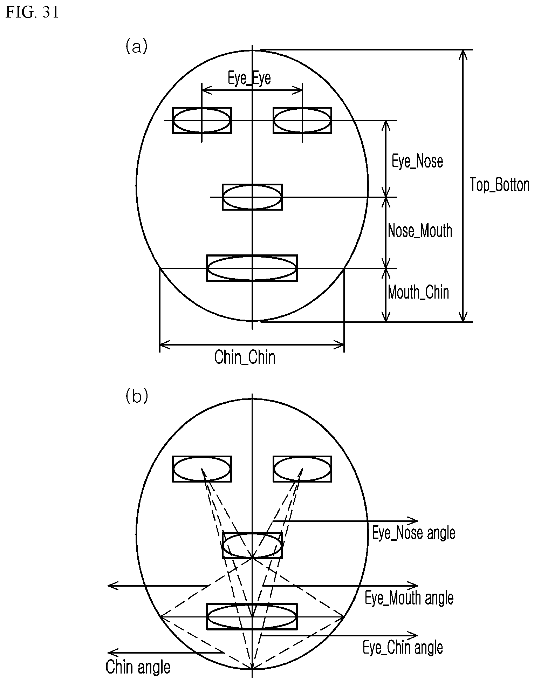

FIG. 31 is a schematic configuration diagram of a face image of the conventional face invention applied to the present disclosure.

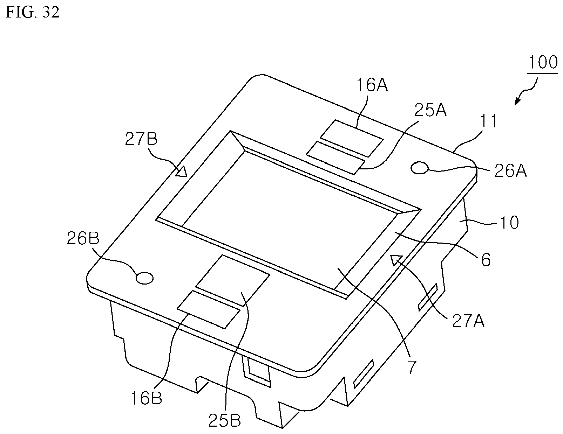

FIG. 32 is a view of an exterior of a finger vein pattern input device according to an embodiment of the conventional invention applied to the present disclosure.

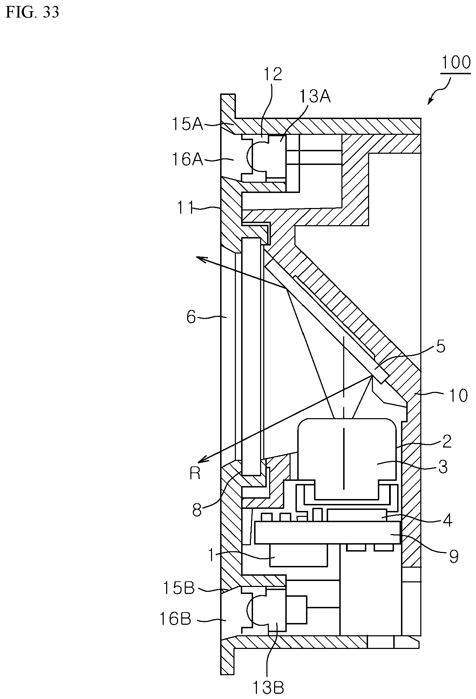

FIG. 33 is a cross-sectional view of the finger vein pattern input device of FIG. 32 applied to the present disclosure.

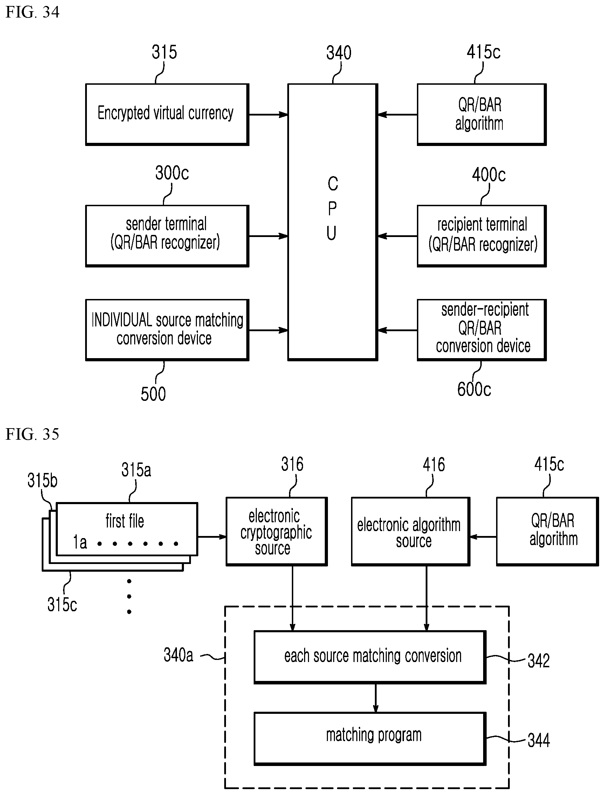

FIG. 34 is a block diagram of matching a virtual currency with quick response (QR)/bar code authentication information using a transaction system of a digital virtual currency with a blockchain between parties of the present disclosure.

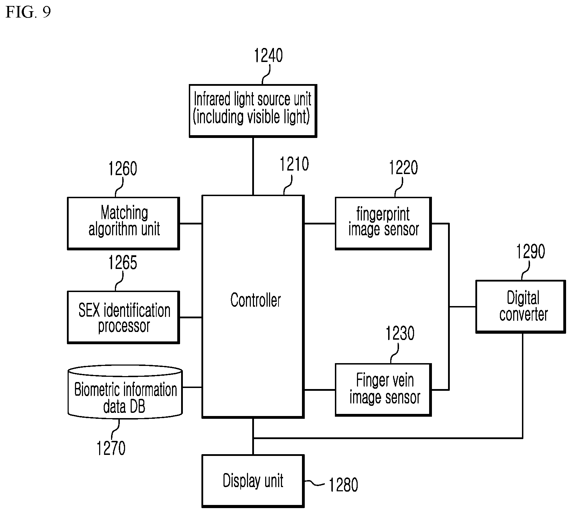

FIG. 35 is a block diagram of another example of FIG. 9 illustrating the execution of the transaction process of the digital virtual currency with the blockchain between the parties using the transaction system of the digital virtual currency with the blockchain between the parties according to the present disclosure.

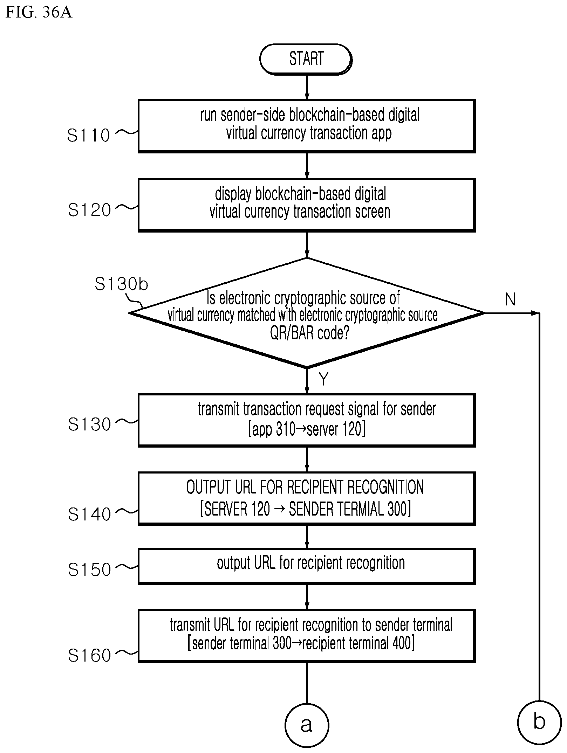

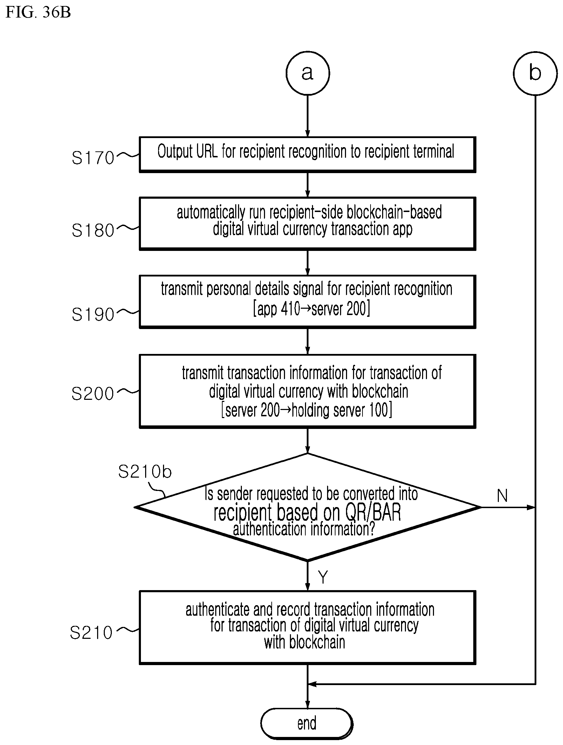

FIGS. 36A and 36B are flowcharts of FIG. 34 illustrating the execution of the transaction process of the digital virtual currency with the blockchain between the parties using the transaction system of the digital virtual currency with the blockchain between the parties according to the present disclosure.

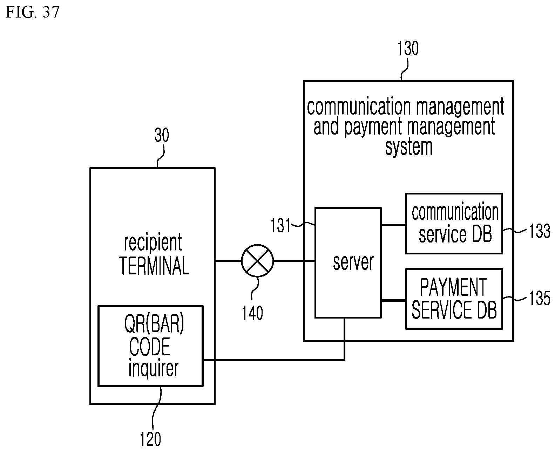

FIG. 37 is a schematic configuration diagram of a system for running a communication service and payment method using a recipient (wireless communication) terminal according to the present disclosure.

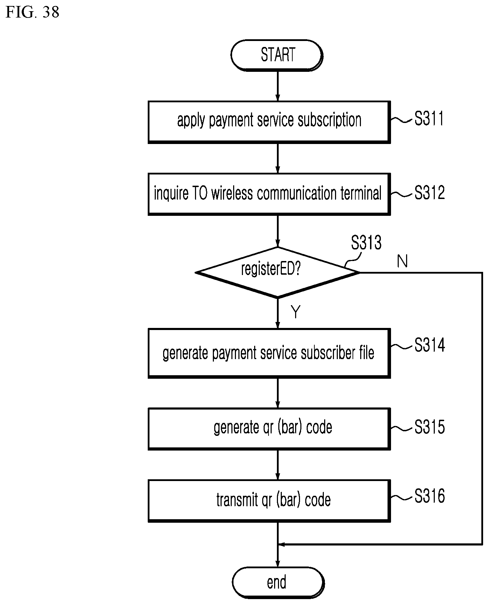

FIG. 38 is a flowchart for describing a payment service subscription step in FIG. 37 in more detail.

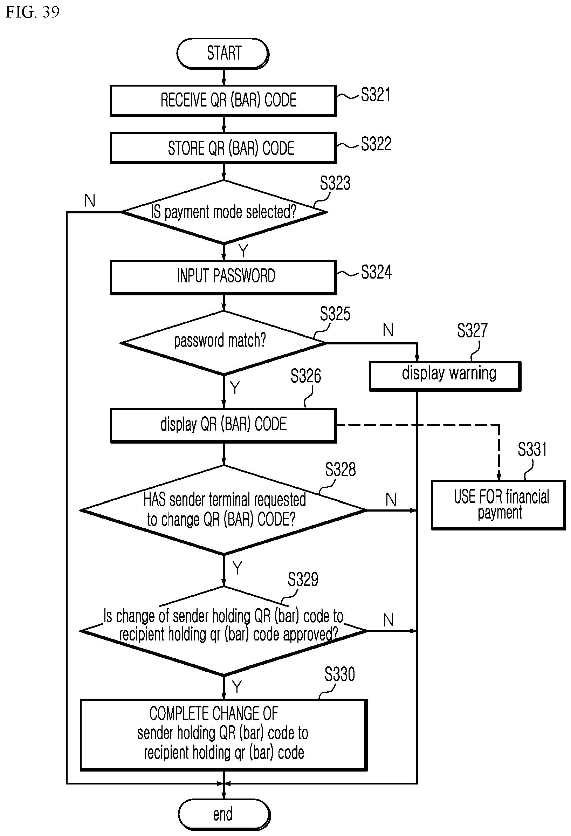

FIG. 39 is a flowchart for describing a payment unit providing step in FIG. 37 in more detail.

### [Mode for Invention]

The present disclosure relates to a digital virtual currency issued by matching the digital virtual currency with a biometric authentication signal, in which for the digital virtual currency in which fingerprint or finger vein authentication information matches with and is stored in each basic unit a file of the virtual currency by a matching program 344, and thus, sender's fingerprint or finger vein authentication information may be converted into recipient's fingerprint or finger vein authentication information by a blockchain-based digital virtual currency transaction guidance server 200, a sender terminal 300 is configured to determine whether the file of the virtual currency matches the fingerprint or finger vein authentication information, and the blockchain-based digital virtual currency transaction guidance server 200 determines whether there is a request for converting the sender's fingerprint or finger vein authentication information matching with and stored in the file of the virtual currency into the recipient's fingerprint or finger vein authentication information, and converts the sender's fingerprint or finger vein authentication information. The fingerprint or finger vein authentication information is issued as iris or face authentication information using a digital signal and authentication information of a quick response (QR) (or bar) code.

### [Best Mode]

Hereinafter, the present disclosure will be described in detail so that those skilled in the art can easily understand and reproduce the present disclosure through a preferred embodiment of the present disclosure described with reference to the accompanying drawings.

Since the meaning of use may be included together with the meaning of use of the term "or," the term sometimes includes the concept of "and/or."

First, in order to help understand the technical contents of the present disclosure, a sender terminal 300 and a recipient terminal 400, which are included in the technical contents that form the basis of the present disclosure even in the related art related to FIG. 1, will be described in detail.

The sender terminal 300 is a terminal member on which a sender-side blockchain-based digital virtual currency transaction app 310 is installed, in which the sender-side blockchain-based digital virtual currency transaction app 310 generates a transaction request signal for a sender that includes amount information on a digital virtual currency with a blockchain to be donated and personal information of sender, transmits the generated transaction request signal for the sender to a digital virtual currency transaction guidance server 200, and designates a recipient and guides a Uniform Resource Locator (URL) for recipient recognition (A) transmitted from the digital virtual currency transaction guidance server 200 to be transmitted to the designated recipient.

Here, the sender-side blockchain-based digital virtual currency transaction app 310 is an application program and may be installed and used by downloading by accessing an app store through the sender terminal 300 or downloading by directly accessing the blockchain-based digital virtual currency transaction guidance server 200 described above.

Instead of the app 310, a hybrid web may be used, and the hybrid web may be activated to access or transmit information therein.

In addition, the sender terminal 300 includes an information input unit such as a keypad that generates a user input signal for controlling or operating the sender terminal 300 according to a user's manipulation in order to operate the sender-side blockchain-based digital virtual currency transaction app 310, an information storage unit that stores the sender-side blockchain-based digital virtual currency transaction app 310 which is a dedicated program or data such as personal information of sender to be described below, an information output unit 301, which outputs multimedia information, such as a blockchain-based digital virtual currency transaction screen 510 to be described below, and a controller that controls overall operation of the sender terminal 300. In order to clearly limit the present disclosure, reference numerals are indicated only on the information output unit 301, and reference numerals are indicated only on the information output unit 401 even in the recipient terminal 400 to be described below.

As the sender terminal 300 performing such a function, palmtops, personal digital assistants (PDAs), communication terminal devices such as smartphones with Internet access, a portable multimedia player (PMP), an ultra-mobile PC (UMPC), and a mobile internet device (MID) may be applied to a variety of terminals, which are similarly applicable even to the recipient terminal 400 to be described below.

The recipient terminal 400 is a terminal member equipped with a recipient-side blockchain-based digital virtual currency transaction app 410 which is automatically run when the URL for recipient recognition (A) transmitted from the sender terminal 300 is clicked to control a personal details signal for recipient authentication including personal information of a recipient receiving a digital virtual currency with a blockchain to be generated and the generated personal details signal to be transmitted to the digital virtual currency transaction guidance server 200.

Here, the sender-side blockchain-based digital virtual currency transaction app 310 and the recipient-side blockchain-based digital virtual currency transaction app 410 are the same app, and prefixes such as a sender side and a recipient side are attached thereto to be clearly distinguished.

In addition, it is preferable that the sender terminal 300 and the recipient terminal 400 are provided based on an instant messenger (IM) so that a recipient can easily select a sender who wants to provide a digital virtual currency with a blockchain.

To this end, the sender terminal 300 is equipped with a sender-side instant messenger, and the recipient terminal 400 is equipped with a recipient-side instant messenger.

As described above, the sender-side instant messenger and the recipient-side instant messenger to be loaded are the same instant messenger, and prefixes such as a sender side and a recipient side are attached thereto to be clearly distinguished.

In this way, the sender-side blockchain-based digital virtual currency transaction app 310 of the sender terminal 300 controls collection and transmission of optional instant message (IM) identification information for identifying the sender-side instant messenger designated by the sender in a transaction request signal for the sender, and when the URL for recipient recognition (A) is transmitted from the digital virtual currency transaction guidance server 200, in the state in which the sender-side instant messenger designated by the sender is controlled to be automatically run, output the URL for recipient recognition (A) to the automatically run sender-side instant messenger, and the sender-side instant messenger is programmed to be transmitted to the recipient terminal 400 corresponding to a recipient account when the sender designates the recipient account of the instant messenger requesting the transmission of the URL for recipient recognition (A).

In addition, the recipient-side instant messenger of the recipient terminal 400 controls the transmitted URL for recipient recognition (A) to be output, and the recipient-side blockchain-based digital virtual currency transaction app 410 of the recipient terminal 400 is programmed to be automatically run when the recipient clicks the URL for recipient recognition (A) displayed on the recipient-side instant messenger so as to generate a personal details signal for recipient authentication and transmit the generated personal details signal to the digital virtual currency transaction guidance server 200.

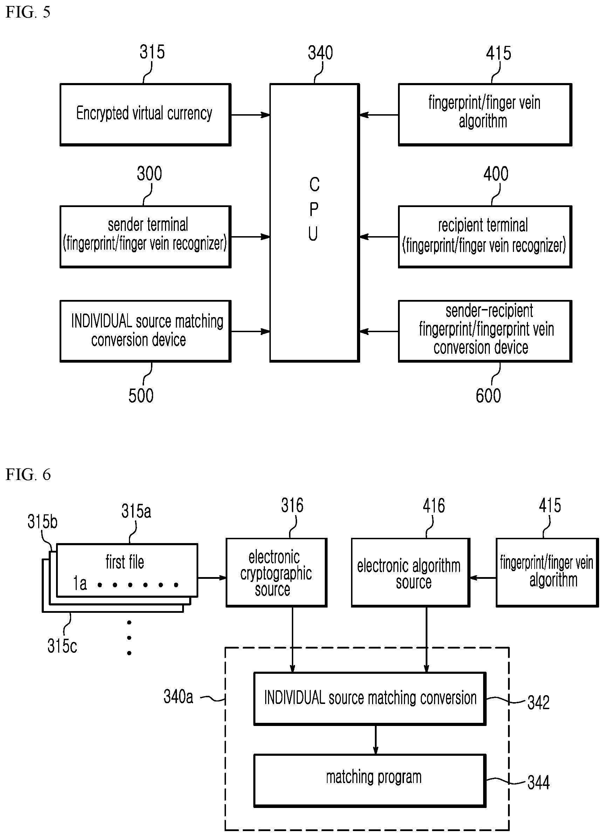

Hereinafter, an embodiment of the present disclosure will be described in detail with reference to FIG. 5.

FIG. 5 is a block diagram of matching a virtual currency with fingerprint/finger vein authentication information using a transaction system of a digital virtual currency with a blockchain between parties according to the present disclosure.

In FIG. 5, a main controller (CPU) 340 illustrated in the block diagram for matching a virtual currency with biometric authentication information using the transaction system of the digital virtual currency with the blockchain between parties of the present disclosure includes an encrypted virtual currency 315 described above, an encrypted fingerprint/finger vein algorithm 415 described above, a sender terminal 300 including a fingerprint/finger vein recognizer, and a recipient terminal 400 including a fingerprint/finger vein recognizer, and includes a conversion device 500 that matches an electronic cryptographic source (including a "file name" in which a virtual currency is formed or a "node" of a virtual currency) of the encrypted virtual currency 315 with an electronic algorithm source of the fingerprint/finger vein algorithm 415, and a sender-recipient fingerprint/finger vein conversion device 600 that converts the virtual currency of the sender into the virtual currency of the recipient in addition to the above-described components.

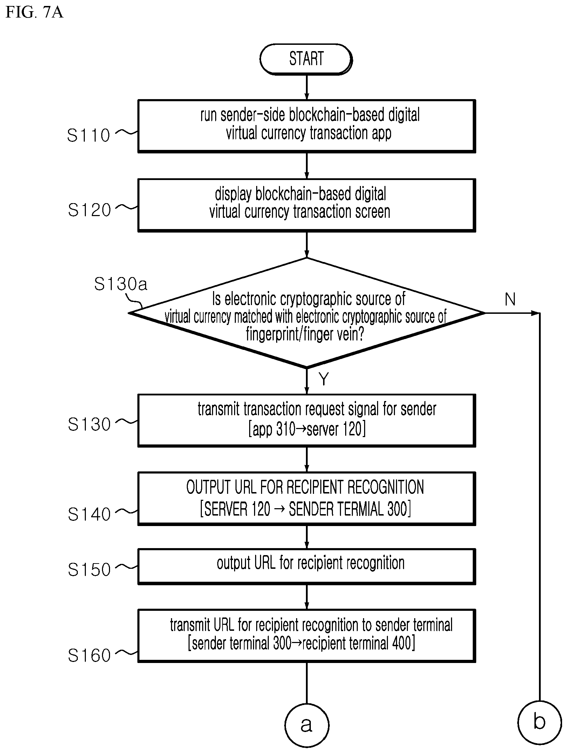

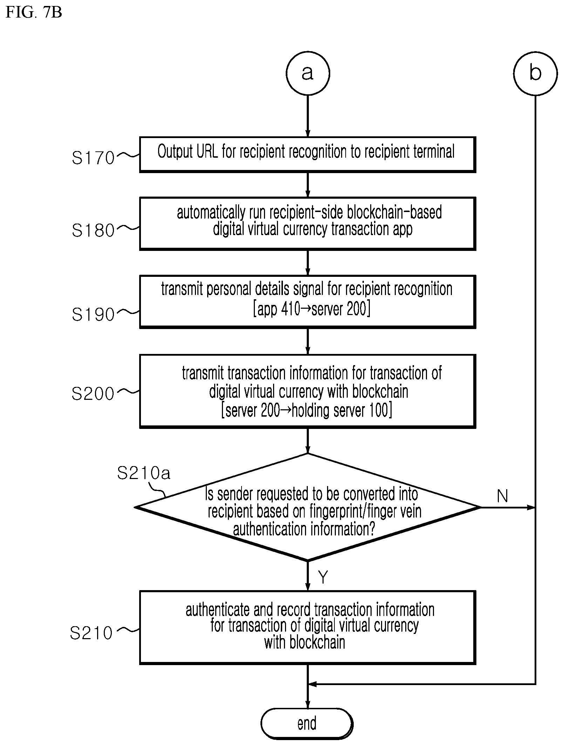

Hereinafter, an embodiment of the present disclosure will be described in detail with reference to FIGS. 6 and 7.

FIG. 6 is a block diagram illustrating execution of a transaction process of a digital virtual currency with a blockchain between parties using the transaction system of the digital virtual currency with the blockchain between the parties according to the present disclosure, and FIG. 7 is a flowchart illustrating the execution of the transaction process of the digital virtual currency with the blockchain between the parties using the transaction system of the digital virtual currency with the blockchain between the parties according to the present disclosure.

The present disclosure relates to a digital virtual currency issued by matching the digital virtual currency with a biometric authentication signal, in which for the digital virtual currency in which fingerprint or finger vein authentication information matches with and is stored in each basic unit of a file of the virtual currency by a matching program 344, and thus, sender's fingerprint or finger vein authentication information may be converted into recipient's fingerprint or finger vein authentication information by a blockchain-based digital virtual currency transaction guidance server 200, a sender terminal 300 is configured to determine whether the file of the virtual currency matches the fingerprint or finger vein authentication information, and the blockchain-based digital virtual currency transaction guidance server 200 determines whether there is a request for converting the sender's fingerprint or finger vein authentication information matching with and stored in the file of the virtual currency into the recipient's fingerprint or finger vein authentication information, and converts the sender's fingerprint or finger vein authentication information.

Here, although described below, the fingerprint/finger vein authentication information is iris/face authentication information.

The description and transaction method thereof will be described in detail.

In the block diagram illustrating the transaction process of the digital virtual currency with the blockchain between the parties by using the transaction system of the digital virtual currency with the blockchain between the parties of the present disclosure in FIG. 6, an electronic cryptographic source 316 provided from a first file 315a, which is a basic unit of a virtual currency interlocked with general matching program 340a, is converted by the general matching program 340a, and an electronic algorithm source 416 provided from the fingerprint/finger vein algorithm 415 is converted by the general matching program 340a, and thus these electronic algorithm sources 316 and 416 may be fused by the matching program 344 to be transacted as a basic unit of transmission.

That is, in a starting step, the digital virtual currency in which fingerprint or finger vein authentication information matches with and is stored in each basic unit of a file of the virtual currency by a matching program 344, and thus, sender's fingerprint or finger vein authentication information, may be converted into recipient's fingerprint or finger vein authentication information by a blockchain-based digital virtual currency transaction guidance server 200 is processed in a fingerprint or finger vein authentication information matching determination step (S130a) of determining, by the sender terminal 300, whether the file of the virtual currency matches the fingerprint or finger vein authentication information.

In a transferring step, the digital virtual currency is formed so that the fingerprint or finger vein authentication information matches with and is stored in each basic unit of the file of the virtual currency by the matching program 344, and thus, the sender's fingerprint or finger vein authentication information may be converted into the recipient's fingerprint or finger vein authentication information by the blockchain-based digital virtual currency transaction guidance server 200 is processed in a sender-recipient's fingerprint or finger vein authentication information converting step (S210a) of determining, by the blockchain-based digital virtual currency transaction guidance server 200, whether there is a request for converting the sender's fingerprint or finger vein authentication information matching with and stored in the file of the virtual currency into the recipient's fingerprint or finger vein authentication information and converting the sender's fingerprint or finger vein authentication information.

Non-explained reference symbols 315b and 315c denote the number of second and third files of virtual currency following the first file, which is the basic unit of the virtual currency.

Of course, in order to transmit a large amount of virtual currency, it is preferable to propose and operate a batch payment program.

In FIGS. 7A and 7B, since the same matter as the procedure shown in the conventional transmission method is used without change, essential components of the present disclosure will be described without change.

In the reference numerals, reference numerals of the same technical contents as those in the related art are used identically.

First, when the sender-side blockchain-based digital virtual currency transaction app 310 installed on the sender terminal 300 is run (S110), the run sender-side blockchain-based digital virtual currency transaction app 310 controls the stored and managed blockchain-based digital virtual currency transaction screen 510 to be output and displayed through the information output unit 301 of the sender terminal 300 (S120).

In this case, in order to prevent exposure of all pieces of information, it is requested by the fingerprint and/or finger vein authentication unit to determine whether the electronic cryptographic source of the virtual currency (including a "file name" or a "node" of the virtual currency in which the virtual currency is formed) matches the electronic algorithm source of the fingerprint or finger vein. Here, it is determined whether the virtual currency matches the fingerprint and/or finger vein authentication information (S130a).

When the above-described conditions are not satisfied, the transaction ends. Thereafter, when the transmission menu 514 is clicked in a state in which the sender terminal 300 inputs the digital virtual currency to the amount display column 511, the instant messenger selection column 512, and the text input column 513 on the displayed blockchain-based digital virtual currency transaction screen 510 through the information output unit 301 according to an input format, the sender-side blockchain-based digital virtual currency transaction app 310 generates a transaction request signal for a sender by collecting the amount information of the digital virtual currency, the optional IM identification information, and the stored and managed personal information of a sender input to the blockchain-based digital virtual currency transaction screen 510 through the sender-side blockchain-based digital virtual currency transaction app, and transmits the generated transaction request signal to the blockchain-based digital virtual currency transaction guidance server 200 (S130).

Thereafter, when the transaction request signal for the sender is transmitted from the sender terminal 300, the blockchain-based digital virtual currency transaction guidance server 200 generates a URL for recipient recognition (A) that guides to recognize a recipient who is bestowed the digital virtual currency with the blockchain after confirming that the sender is a member by matching the personal information of the sender included in the transaction request signal for the sender with the member list information DB 211 and transmitting the generated URL for recipient recognition (A) to the sender terminal 300 (S140).

Thereafter, in a state in which the sender-side instant messenger corresponding to the optional IM identification information is controlled to be automatically run when the URL for recipient recognition (A) is transmitted from the blockchain-based digital virtual currency transaction guidance server 200, the sender-side blockchain-based digital virtual currency transaction app 310 of the sender terminal 300 controls a URL display guidance screen for a sender-side instant messenger (see FIG. 3B) with the URL for recipient recognition (A) displayed by being inserted into the automatically run sender-side instant messenger to be output through the information output unit 301 (S150).

Thereafter, when the recipient account of the instant messenger for the sender to request the transmission of the URL for recipient recognition (A) is designated by the sender designation guidance screen for the sender-side instant messenger (see FIG. 3C), the sender-side instant messenger of the sender terminal 300 transmits the URL for recipient recognition (A) to the recipient terminal 400 corresponding to the recipient account (S160).

Thereafter, the recipient-side instant messenger of the recipient terminal 400 controls a URL display guidance screen for a recipient-side instant messenger (see FIG. 3D) into which the transmitted URL for recipient recognition (A) is inserted and displayed to be output through the information output unit 401 (S170).

Thereafter, when the URL for recipient recognition (A) displayed on the recipient-side instant messenger of the recipient terminal 400 is clicked, the recipient-side blockchain-based digital virtual currency transaction app 410 is automatically run simultaneously with the click (S180).

The automatically run recipient-side blockchain-based digital virtual currency transaction app 410 of the recipient terminal 400 generates a personal details signal for recipient authentication including personal information of a recipient who is bestowed a digital virtual currency with a blockchain and transmits the generated personal details signal for recipient authentication to the digital virtual currency transaction guidance server 200 (S190).

Thereafter, the blockchain-based digital virtual currency transaction guidance server deducts an amount to be donated to the recipient from the blockchain-based digital virtual currency amount information stored in electronic wallet information of the sender in an electronic wallet list information DB 212 after confirming that the recipient is a member by matching the personal information of the recipient included in the personal details signal for recipient authentication with a member list information DB 211 when the personal details signal for recipient authentication is transmitted from the recipient terminal 400, accumulates the deducted amount in the blockchain-based digital virtual currency amount information stored in the electronic wallet information of the recipient, generates the transaction information for the transaction of the digital virtual currency with the blockchain based on the accumulated amount, and transmits the generated transaction information for the transaction of the digital virtual currency with the blockchain to the designated blockchain holding servers 100 (S200).

In this case, the blockchain-based digital virtual currency transaction guidance server 200 performs a sender-recipient's fingerprint or finger vein authentication information converting step (S210a) of determining whether there is a request for converting a sender of the virtual currency matching the electronic cryptographic source (including the "file name" or the "node" of the virtual currency in which the virtual currency is formed) of the virtual currency and the electronic algorithm source of the fingerprint or finger vein into a recipient by the authentication signal of the fingerprint or finger vein, and converting information thereof.

Thereafter, when the transaction information for the transaction of the digital virtual currency with the blockchain is transmitted, the authentication of the transaction is performed so that each designated blockchain holding server 100 verifies the transmitted transaction information for the transaction of the digital virtual currency with the blockchain to authenticate a blockchain-based digital virtual currency transaction and records the transaction information for the transaction of the digital virtual currency with the blockchain according to the authentication (S210).

Thereafter, the blockchain-based digital virtual currency transaction guidance server 200 transmits a message indicating that the sender terminal 300 has paid the digital virtual currency with blockchain to the recipient.

Thereafter, in the state in which the sender-side instant messenger corresponding to the optional IM identification information is controlled to be automatically run when a message is transmitted from the blockchain-based digital virtual currency transaction guidance server 200, the sender-side blockchain-based digital virtual currency transaction app 310 of the sender terminal 300 controls a payment confirmation guidance screen (see FIG. 3E) for a sender-side instant messenger with the message displayed by being inserted into the automatically run sender-side instant messenger to be output through the information output unit 301.

In addition, in the state in which the recipient-side instant messenger is controlled to be automatically run when the message is transmitted from the blockchain-based digital virtual currency transaction guidance server 200, the recipient-side blockchain-based digital virtual currency transaction app 410 of the recipient terminal 400 controls the accumulative storage guidance screen for the recipient-side instant messenger (see FIG. 3F) in which the message is inserted and displayed in the automatically run recipient-side instant messenger to be output through the information output unit 401.

As another transaction method of bitcoin (same concept as virtual currency), a transaction method of bitcoin (same concept as virtual currency) which is a transaction method of a crypto-currency having a blockchain structure in which transmission records made on the network are collected and encrypted and having no issuance subject of currency includes: mining and acquiring the bitcoin (same concept as virtual currency) while authenticating the transaction of the bitcoin (same concept as virtual currency) by running a program installed on a computer that constitutes a bitcoin (same concept as virtual currency) network; generating a member's exchange web wallet address on the crypto-currency exchange server by running a member server installed with a program provided from a crypto-currency exchange server or a program installed on the member computer when the bitcoin (same concept as virtual currency) acquired by being mined and purchased for the transaction of the bitcoin (same concept as virtual currency) with the program run by the computer is transacted by running the program installed on the computer; generating an address of a general wallet of an exchange for the bitcoin transaction on the crypto-currency exchange server through the crypto-currency exchange server equipped with a database (DB) in which transaction details of transacted bitcoin (same concept as virtual currency) by running the program installed on the member server or the member computer are stored; and generating a member's exchange address stored in the crypto-currency exchange server in order to transact the bitcoin (same concept as the virtual currency) by running the program installed on the member server or the member computer.

In this case, the transaction method includes: when the sender-side biometric authentication is requested by fingerprint and/or finger vein authentication unit for identity authentication before transmitting the bitcoin (same concept as virtual currency), determining whether the fingerprint and/or finger vein authentication is performed;
when it is requested by fingerprint and/or finger vein authentication unit to determine whether the electronic cryptographic source of the virtual currency (including the "file name" or the "node" of the virtual currency in which the virtual currency is formed) matches the electronic algorithm source of the fingerprint or finger vein, determining whether the virtual currency matches the fingerprint or finger vein authentication information; in order to quickly process the bitcoin (same concept as a virtual currency) transaction by running the program installed on the member server or the member computer, transmitting the bitcoin (same concept as virtual currency) from a member's exchange web wallet address created on the crypto-currency exchange server to an exchange general wallet address; and confirming the transmission of the bitcoin (same concept as virtual currency) from the member's own exchange web wallet address created on the crypto-currency exchange server to the exchange general wallet address created on the exchange server while the program installed on the crypto-currency exchange server is running.

In this case, the transaction method of bitcoin (same concept as virtual currency) includes: when it is confirmed that the transmission of the bitcoin (same concept as virtual currency) has been made, depositing the bitcoin (same concept as virtual currency) to the exchange address of the member stored by executing the program installed on the crypto-currency exchange server by changing numerical values on the DB installed on the crypto-currency exchange server, not an actual bitcoin (same concept as virtual currency); and when the transaction of the bitcoin (same concept as virtual currency) is completed by changing the numerical values on the DB mounted on the crypto-currency exchange server, offsetting a pre-deposited portion without depositing the bitcoin into a member's DB.

In this case, if necessary, a sender-recipient's fingerprint or finger vein authentication information converting step of determining whether there is a request for converting the sender of the virtual currency matching the electronic cryptographic source (including the "file name" or the "node" of the virtual currency in which the virtual currency is formed) of the virtual currency and the electronic algorithm source of the fingerprint or finger vein into the recipient by the authentication signal of the fingerprint or finger vein, and converting information thereof is performed.

To summarize the above description, according to the present disclosure, the main controller (CPU) 340 for matching the virtual currency with the biometric authentication information using the transaction system of the digital virtual currency with the blockchain between the parties includes the encrypted virtual currency 315, the encrypted fingerprint/finger vein algorithm 415, the sender terminal 300 including the fingerprint/finger vein recognizer, and the recipient terminal 400 including the fingerprint/finger vein recognizer, and includes the conversion device 500 that matches the electronic cryptographic source of the encrypted virtual currency 315 with the electronic algorithm source of the fingerprint/finger vein algorithm 415, and the sender-recipient fingerprint/finger vein conversion device 600 that converts the virtual currency of the sender into the virtual currency of the recipient in addition to the above-described components.

Further, there is provided a method of issuing a digital virtual currency transmitted by the linking digital virtual currency with a biometric authentication signal, in which the electronic cryptographic source 316 provided in the first file 315a, which is the basic unit of virtual currency linked with the general matching program 340a, is converted in the general matching program 340a, and the electronic algorithm source 416 provided by the fingerprint/finger vein algorithm 415 is converted in the general matching program 340a, the electronic cryptographic source 316 and the electronic algorithm source 416 are fused by the digital signal as the electronic cryptographic source and the digital signal as the electronic algorithm source of the fingerprint/finger vein to be transacted in the basic unit of the transmission of the virtual currency, and at the same time, the electronic algorithm source 416 of the fingerprint or finger vein may be converted into the electronic algorithm source of the fingerprint or finger vein by the sender-recipient fingerprint/finger vein conversion device 600 by the blockchain-based digital virtual currency transaction guidance server 200.

Here, the fingerprint and/or finger vein authentication unit is formed as follows.

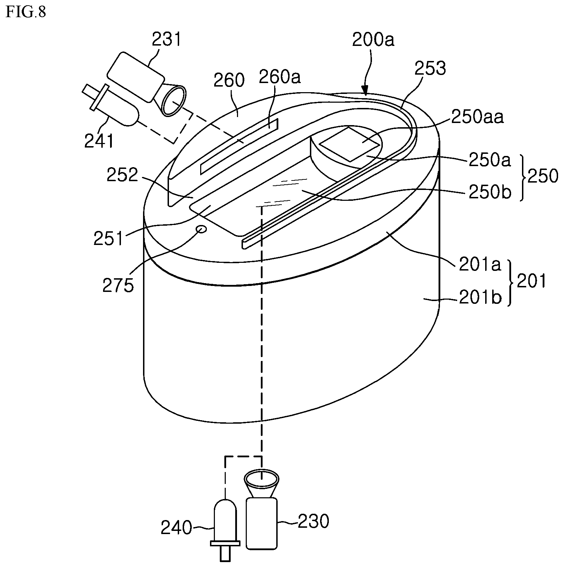

FIG. 8 is a diagram conceptually illustrating an image acquisition mechanism of a finger vein and a finger fingerprint of an authentication device according to an embodiment of the present disclosure, FIG. 9 is a diagram illustrating an example of an internal electronic configuration of the authentication device of the present disclosure, and FIG. 10 shows diagrams illustrating a finger fingerprint surface (see FIG. 10A) and a finger side surface (see FIG. 10B) of the same finger photographed by a finger vein image sensor and a finger fingerprint image sensor.

As illustrated in FIG. 8, the present disclosure relates to an integrated photographing authentication device 200a capable of photographing fingerprints and finger veins, in which an object receiving unit 201 includes a scan panel upper case 201a that forms a finger seating part and a scan panel lower case 201b that accommodates an electric part thereof. An upper portion of the scan panel upper case 201a is provided with a scan panel 250 that is made of a transparent material such as glass or acrylic and simultaneously photographs fingerprints and finger veins, and the scan panel 250 is provided with a fingerprint finger contact part 250a and a finger vein non-contact part 250b that are formed with a step therebetween.

A groove side wall 251 is provided with an edge so that the finger vein non-contact part 250b of the scan panel 250 may be formed as a groove, and the finger seating part 252 is formed to be parallel with the fingerprint finger contact part 250a so that a finger may be put around an upper end of the finger seating part 252.

In addition, a temperature sensor 275 for detecting a temperature of a blood flow of a finger is formed in front of the finger vein non-contact part 250b to face the fingerprint finger contact part 250a of the scan panel 250, and thus, is formed to detect the temperature and blood flow of the finger when the finger makes contact so that the finger vein is recognized by the detected temperature and flow.

In addition, an infrared side transmitter case 260 has an infrared side transmitter 260a accommodated on one side thereof to perform photographing from a side, thereby more accurately photographing a finger vein.

The scan panel lower case 201b is formed with a space that may accommodate electrical parts.

Then, a finger seating border 253 on which a finger may be seated is formed.

Therefore, in a first embodiment of the present disclosure, a user starts finger vein authentication by placing a finger object on the scan panel 250, and when the finger vein authentication is started by the device, infrared light source units 240 and 241 irradiate infrared rays from a lower portion and a side portion toward the finger object.

In addition, a lower finger vein image sensor 230 is installed inside the object receiving unit 201, and thus, the finger vein of the object is photographed from the bottom toward the scan panel 250.

In addition, a side finger vein image sensor 231 is installed inside the infrared side transmitter case 260, and thus, the finger vein of the object is photographed from the side portion toward the scan panel 250.

In addition, a fingerprint recognition unit forms a fingerprint recognition module 250aa to provide a method of determining a fingerprint by contact with the fingerprint.

The fingerprint recognition module 250aa has a multi-layered thin plate structure, and a fingerprint recognition layer is formed on an upper portion of the fingerprint authentication module, and a temperature and blood flow sensing authentication layer is formed on a lower portion thereof to detect a temperature and blood flow of a human body and then may be formed to start its operation below.

FIG. 9 is an example of an internal electronic configuration of a finger vein photographing authentication device according to a preferred embodiment of the present disclosure.

The integrated photographing authentication device 200a includes the infrared light source unit 1240, the finger vein image sensor 1230, a finger fingerprint image sensor 1220, a digital converter 1290, a matching algorithm unit 1260, a sex identification processor 1265, a biometric information data DB 1270, and a display unit 1280.

In addition, although not illustrated in the drawing, the integrated photographing authentication device 200a may include a power supply unit, a communication unit, and various input/output (I/O) devices.

The infrared light source unit 240 irradiates infrared light toward the object receiving unit. Preferably, the infrared light source unit 240 emits infrared light having a wavelength of 630 to 1,000 nm suitable for imaging a finger vein image and may include one or more light-emitting diodes (LEDs). In addition, an optical filter may be preferably installed to remove optical noise.

A visible light source unit 242 irradiates visible light toward the object receiving unit. The visible light source unit 242 serves to emit ultraviolet light of a wavelength suitable for photographing a finger fingerprint on a surface of a finger and may include one or more LEDs.

In addition, in some embodiments of the present disclosure, one infrared light source unit 240 and one visible light source unit 242 for irradiating infrared light and visible light toward the object receiving unit may be installed.

In another embodiment of the present disclosure, a plurality of infrared light source units 240 and visible light source units 242 are installed in the object receiving unit 101 so that infrared rays and visible lines reach the object evenly, thereby optimizing image acquisition.

In a preferred embodiment of the present disclosure, the finger vein image sensors 230 and 231 acquire finger vein images for one finger object from a lower portion and a side portion.

In another preferred embodiment of the present disclosure, the finger vein image sensor 230 acquires finger vein images of a fingerprint surface and a side surface of one finger object.

FIGS. 10A and 10B illustrate angles at which infrared rays are photographed from the inner surface and a side surface of one finger, respectively.

Non-explained reference symbol 1a denotes a finger vein portion between knuckles, non-explained reference symbol 1b denotes a knuckle, and non-explained reference symbol 1c denotes a fingerprint portion.

When photographing a front image of a finger object, photographing is performed while placing the finger so that the finger fingerprint surface of the finger touches the scan panel, and depending on the number of finger vein image sensors 230, 231, 232, and 233, when photographing a side image, a side surface of a finger touches the scan panel at 90° from the side surface itself. The photographing order of the finger fingerprint surface and the side surface of the finger may be interchanged.

The digital converter 1290 receives both the finger vein image and the finger fingerprint image to extract the finger vein and finger fingerprint images. According to the present disclosure, finger vein and finger fingerprint image files for a finger are obtained by the digital converter 1290.

A controller 1210 transmits the image files converted by the digital converter 1290 to the matching algorithm unit 1260.

If necessary, the sex identification processor 265 serves to classify male information as "1" and female information as "2" and register the male information and the female information when simultaneously authenticating the fingerprint and the finger vein.

According to the earlier application of the present inventor, there is a method of storing data of human body information divided by a bank, a sex, and a generation when building such a server.

In addition, the pre-stored user's biometric information is stored in a biometric information data DB 1270. In any embodiment of the present disclosure, the biometric information data DB 1270 may be built in an internal memory of the authentication device.

In another embodiment of the present disclosure, the data DB 1270 is located in a storage external to the device and may be accessed through wired or wireless communication.

The biometric information data DB 1270 may use a crypto-processor that may be protected from external hardware and software attacks or theft.

The matching algorithm unit 1260 acquires user data stored in the biometric information data DB 1270 and then determines whether the user data matches a user's biometric information value acquired from the digital converter 1290. When the user data matches a user's biometric information value, a success message may be output through a display unit 1280. When the decryption fails, an authentication failure message may be output on the display unit 1280.

The controller 1210 controls the operation and function of the authentication device.

In particular, the controller 1210 determines acquisition, processing, an authentication operation, and an authentication result of the finger vein image. Various types of software may be used for the processing and operation of the acquired finger vein image.

For example, a Canny edge detector algorithm may be used. By applying a Gaussian filter, noise of an original image may be completely removed. An image is edged through an image gradient. That is, a sketch line of the image is extracted. An operation of making a corner (sketch line) thin by applying non-maximum suppression is executed. By applying a double threshold, a thick edge is classified as a clear edge, and a blurred edge is classified into a weak edge by being considered as noise. Finally, the weak edges are deleted, and only the clear edges are left, so the edged image of the finger vein is output.

The integrated module that interlocks the fingerprint and finger vein algorithms to implement this may be described as follows.

FIG. 11 is a diagram illustrating an I/O integrated module interlocking fingerprint and finger vein algorithms, FIG. 12 is a flowchart for requesting a registration of a fingerprint and a finger vein, FIG. 13 is a flowchart for requesting an authentication of the fingerprint and the finger vein, and FIG. 14 is a flowchart for requesting a deletion of the fingerprint and the finger vein.

As illustrated in FIG. 11, an I/O integrated module U1 that simultaneously interlocks the fingerprint and finger vein algorithms includes a fingerprint module U2, a finger vein module U3, and a conversion module U4.

First, the fingerprint module U2 will be described.

A first line GND of the fingerprint module U2 is a reference of a (-) voltage circuit and serves as a 0 V grounding function, a second line RX is a serial data receiving port and serves to control the fingerprint module, a third line TX is a serial data transmission port and serves to read the fingerprint module status, and a fourth line VCC serves as a +5 V voltage input based on a (+) voltage of a power circuit. In the above configuration, the image sensor scans a fingerprint and compares the scanned fingerprint with the pre-stored image to output a registered authentication code of a person with the same fingerprint image in serial communication (here, RS232 communication is applied as an example).

Here, 232 communication is one of serial communication standards.

The finger vein module U3 will be described below.

A first line GND of the finger vein module U3 serves as a 0 V grounding reference as a negative voltage reference, a second line A is a port A for RS485 communication of the serial communication standard and serves to receive and transmit data, a third line B is a port B for RS485 communication of the serial communication standard and serves to receive and transmit data, and a fourth line VCC serves to input a +5 V voltage based on the (+) voltage of the power circuit. In the above configuration, when there is a person with the same image from scanning a vein in the camera image sensor after penetrating a finger with an infrared LED and comparing the scanned vein with the pre-stored vein image, the registered authentication code of the person is output in the serial communication (here, as an example, RS 485 communication is applied).

Here, 485 communication is one of the serial communication standards.

The conversion module U4 from 485 communication to 232 communication will be described below.

A first line GND on the left side of the conversion module U4 serves as a 0 V grounding function as a reference of a (-) voltage, a second line A is a port A for RS485 communication of the serial communication standard and serves to receive and transmit data, a third line B is a port B for RS485 communication of the serial communication standard and serves to receive and transmit data, and a fourth line VCC serves to input +5 V voltage based on a (+) voltage. The above configuration receives signals of the 485 communication output from the finger vein module and converts the received signals of 485 communication into signals of 232 communication.

A fifth line DI on the right side of the conversion module U4 is a receiving port for RS serial 232 communication and serves to receive data, a sixth line RE is a control port for 485 communication and controls the transmission/reception status of the 485 communication module, a seventh line DE is a control port for 485 communication and controls the transmission/reception status of the 485 communication module, and an eighth line RO is a transmission port for serial 232 communication and serves to transmit instructions and will be integrated with the integrated module U1.

Next, the fingerprint and finger vein input and universal serial bus (USB) output integrated module U1 will be described.

A first line D1/TX of the integrated module U1 is a transmission port for serial 232 communication and serves to transmit data to the computer, a second line D0/RX is a receiving port for serial 232 communication and serves to receive data from the computer, a fourth line GND is the reference of the (-) voltage and serves as 0 V ground, a fifth line D2 is a transmission line for serial 232 communication with a fingerprint module U2and serves to transmit commands to the fingerprint module, a sixth line D3 is a reception line for serial 232 communication with a fingerprint module U2 and serves to receive a state value of the fingerprint module, an eighth line D8 is a transmission port for serial 232 communication of the 485-232 communication conversion module U4 and serves to control the finger vein module U3, a 12^{th} line D9 is a control port for 485 communication of the 485-232 communication conversion module U4 and serves to control the transmission/reception status of the 485 communication module, a 13^{th} line D10 is a control port for 485 communication of the 485-232 communication conversion module U4 and serves to control the transmission/reception status of the 485 communication module, a 14^{th} line D11 is a transmission port for serial 232 communication of the 485-232 communication conversion module U4 and serves to read the status of the finger vein module U3, a 27^{th} line 5V is a (+) voltage 5 V output PIN and serves to supply 5 V voltage for the fingerprint module U2, the finger vein module U3, and the 485 communication conversion module U4, a 29^{th} line GND is the reference of the (-) voltage and serves as 0 V ground, and a 30^{th} line VIN is based on the (+) voltage and serves as a +5 V voltage input. The above configuration includes a fingerprint authentication code (a unique number of a customer of which the fingerprint is registered) output from the fingerprint module U2 and converts the finger vein authentication code (a unique number of a customer of which the finger vein is registered) output from the finger vein module U3 into signals of the 232 communication in the conversion module U4 and receives the signals of the 232 communication from the integrated module U1, thereby outputting the corresponding authentication code to the USB when the finger and finger vein authentication codes match each other.

The fingerprint and finger vein algorithms of the present invention in this case may be expressed as follows.

```
 int getfingerauthorization(int fingerprintcode,int fingerveincode)
 {
 if(fingerprintcode>0 && fingerveincode>0 && fingerprintcode==fingerveincode))
 {
 return fingerprintcode;
 }
 return 0;
 }
```

The algorithm is an algorithm that receives the fingerprint authentication code and the finger vein authentication code from the integrated module U1 and allows the authentication code only when the fingerprint and the finger vein belong to the same person.

This will be described in more detail below.

The fingerprint module U2 searches for a fingerprint and, when there is a person who matches the fingerprint, outputs a code number of the person.

The finger vein module (U3) searches for a finger vein and, when there is a person who matches the corresponding finger vein, outputs the code number of the corresponding person.

The fingerprint code of the fingerprint module U2 and the finger vein code of the finger vein module U3 are received as fingerprintcode and fingerveincode, which are arguments of a function name getfingerauthorization of the above algorithm, respectively, and then the fingerprint and finger vein integrated module outputs the code of the corresponding person only when both argument values are valid and two registered unique numbers of a customer match.

In addition, when the fingerprint code and the finger vein code are invalid or do not match, an error code of zero is output.

A procedure of registering, authenticating, and deleting a fingerprint and a finger vein in a recognizer or a bank that self-stores the fingerprint and finger vein will be described below.

First, as illustrated in FIGS. 12 to 14, in a step of registering a fingerprint and a finger vein, a registration request is made by a fingerprint and finger vein recognizer (S311).

When there is a registration request from a fingerprint and finger vein recognizer, a fingerprint and a finger vein of a finger of a person to be registered are first-order scanned on the recognizer (S312).

Next, the fingerprint and finger vein are first-order registered in the fingerprint and finger vein recognizer again, and then, a fingerprint and finger vein of the finger of the person to be registered are second-order scanned on the recognizer (S313).

Next, the fingerprint and finger vein are first-order registered in the fingerprint and finger vein recognizer again, and then, and then, the fingerprint and finger vein of the finger of the person to be registered are third-order scanned on the recognizer (S314).

In order to measure the accuracy of the three registrations of the fingerprint and finger vein in the recognizer, it is determined whether all three of the scanned images match (S315).

As described above, the registration of the fingerprint and finger vein in the recognizer three times is restarted when all three of the scanned images do not match, and when all three of the scanned images match, the registration is completed (S316).

By performing this process three times, the correct fingerprint and finger vein images are registered.

Next, in a step of authenticating the registration of the fingerprint and finger vein, an authentication request is made from the fingerprint and finger vein recognizer (S321).

The fingerprint and finger vein recognizer scans a person's fingerprint and finger vein image (S322).

The scanned images of the fingerprint and finger vein of the finger of the person registered in the fingerprint and finger vein recognizer are compared (S323).

It is determined whether the images scanned by such a fingerprint and finger vein recognizer match (S324).

As described above, the authentication is restarted when all the scanned images in the fingerprint and finger vein recognizer do not match, and when all the scanned images match, the authentication is completed (S325).

Next, in a step of deleting the registration of the fingerprint and finger vein, a deletion request is made from the fingerprint and finger vein recognizer (S331).

A code of a party to be deleted is input to the fingerprint and finger vein recognizer (S332).

It is determined whether to delete the image of the code to be registered in the fingerprint and finger vein recognizer (S333).

When the image scanned by the fingerprint and finger vein recognizer is not deleted, the authentication is restarted, and when the image scanned by the fingerprint and finger vein recognizer is deleted, the authentication is completed (S334).

As described above, when it is operated as a method of registering, authenticating, and deleting a fingerprint and a finger vein in a recognizer or a bank that self-stores the fingerprint and finger vein, the recognition degree of the fingerprint and finger vein is further increased, and the operation thereof is simplified.

The following is an example in the present disclosure and relates to a mouse.

FIG. 15 is a schematic perspective view of a mouse authenticated with fingerprint 1, fingerprint 2 and a finger vein applied to the present disclosure and is a diagram conceptually illustrating an image acquisition mechanism of a fingerprint, a finger vein, and a finger fingerprint of a mouse M according to an embodiment of the present disclosure.

As illustrated in the figure, a scroll wheel C, a right mouse button C1, and a left mouse button C2 are formed in a normal mouse M, a fingerprint recognizer 1000 is formed at a lower left end of the mouse M, and a fingerprint and finger vein recognizer 2000 is formed between an upper end of the scroll wheel C and the right mouse button C1 and the left mouse button C2 on the mouse M.

The fingerprint recognizer 1000 at a lower left end of the mouse M has a tetragonal contact-type fingerprint authentication module device unit 1000a provided within a fingerprint recognition seating border 1000b, and the finger vein recognizer 2000 at the upper end of the mouse M has a fingerprint authentication module 1001a and a finger vein authentication device unit 2000a provided within the mouse, and a camera 2000b and a plurality of infrared light sources 2000c are formed inside the mouse M at a certain distance to photograph and authenticate a finger vein of a finger placed on the finger vein authentication device unit 2000a.

In addition, an infrared light source 2000d emitting infrared rays to a finger is formed on a side portion of a rounded finger vein recognition seating edge 2000e, and a fingertip stand 2000f on which a fingertip may be placed is formed on a front end of a central portion thereof.

A circuit related to the fingerprint and finger vein authentication module applied here will be described below.

Therefore, in the case of authenticating the fingerprint and/or finger vein during e-commerce or financial payment, after holding the mouse itself in normal use, a first fingerprint recognizer primarily recognizes a fingerprint of a thumb, and each fingerprint and/or finger vein is authenticated by placing a finger vein finger such as a thumb or a middle finger on the finger vein recognizer.

Therefore, since the fingerprint and/or finger vein may be authenticated with a time difference during online e-commerce or financial payment, the fusion of two fingerprints and one finger vein may solve the weakness of financial security due to biometric authentication.

Moreover, the authentication method with the two-step time difference requires biometric authentication for data input even when working with documents on a computer, but the authentication method provides a different biometric unit with a time difference in authentication, and as a result, it is possible to provide a computer hacking blocking device that may be safely protected from the outside, and furthermore, to provide a computer hacking blocking device that may safely protect the computer input data from the outside without separately encrypting the computer input data.

Next, a fingerprint and finger vein authentication processing unit 1180 that may be commonly applied to a smart phone and a mouse or an integrated terminal, which is a transmitter according to a first embodiment, will be described in detail.

First, the contact-type fingerprint and finger vein authentication device will be described.

FIG. 16 is a perspective view schematically illustrating a contact-type fingerprint and finger vein authentication device of an integrated payment device using a biometric authentication integrated terminal of the present disclosure.

As illustrated in FIG. 16, the fingerprint and finger vein authentication processing unit 1180 formed in the biometric authentication integrated terminal 1000 has a contact-type fingerprint scan module 2310 formed on an upper portion thereof, and a finger photographing groove 2410 is formed on a lower side thereof, which is an invention that performs the fingerprint and finger vein authentication.

The fingerprint scan module 2310 uses a contact-type recognition module, and a recognition circuit electric part 2320 for controlling the same is formed on a rear surface thereof.

The authentication device unit 2100 for acquiring the finger vein information is formed to authenticate the finger vein at a lower edge of a main body side of the terminal, but the inside of the terminal is provided with a significant authentication device unit space 2500, into which the contact-type fingerprint scan module 2310 and the finger vein authentication device unit 2100 may enter, in a pyramid shape, an outside thereof is provided with a side groove border 2200 to form the contact-type fingerprint scan module 2310 on the upper side therein, and a lower side thereof is provided with a finger photographing groove 2410 to place fingers in a non-contact manner and recognize the fingers simultaneously.

A very thin finger rest glass plate may be formed in the finger photographing groove 2410 to prevent the inflow of external dirt or the like.

In this case, the image sensor may be operated by attaching an infrared filtering film that blocks visible light by using the finger rest glass plate.

Furthermore, the finger rest glass plate may be manufactured to be formed in the front portion of an image sensor 2510a and an infrared ray emitter 2520a adjacent to each other together with the infrared filtering film.

Then, an empty finger photographing groove 2410 is formed in the lower side thereof to comfortably place a finger f.

In addition, the authentication device unit space 2500 on the rear surface of the empty finger photographing groove 2410 is provided with the image sensor 2510a and the infrared ray emitter 2520a side by side, and a recognition circuit electric part 2530 for controlling the same is formed, and thus, when the finger vein pattern is recognized, they are activated to transmit various control signals.

When the empty finger photographing groove 2410 is designed so that there is no risk of damage to the image sensor 2510a and the infrared ray emitter 2520a, the empty finger photographing groove 2410 may be formed to communicate with the authentication device unit space 2500 in a non-contact manner according to the surrounding conditions.

In addition, in the case of the image sensor 2510a, the range in which the finger vein is recognized is different depending on the size. Accordingly, when a wide range of finger veins is recognized, a wide range of finger veins may be recognized by increasing a distance Ha from a finger, and when a distance is short, only a narrow range of finger vein patterns is recognized, so the image sensor 2510a should be devised and designed in consideration of the relationship with the size of the electric part inside the terminal.

A technology for matching virtual currency with iris/face authentication information using the transaction system of digital virtual currency will be described below.

FIG. 17 is a block diagram of matching a virtual currency having iris/face authentication information using the transaction system of the digital virtual currency with the blockchain between the parties of the present disclosure.

In FIG. 17, a main controller (CPU) 340 illustrated in the block diagram for matching a virtual currency with iris/face authentication information using the transaction system of the digital virtual currency with the blockchain between parties of the present disclosure includes the encrypted virtual currency 315 described above, an encrypted iris/face algorithm 415b described above, the sender terminal 300b including the iris/face recognizer, and a recipient terminal 400b including the iris/face recognizer and includes the conversion device 500 that matches an electronic cryptographic source (including a "file name" in which a virtual currency is formed or a "node" of a virtual currency) of the encrypted virtual currency 315 with the electronic algorithm source of the iris/face algorithm 415b, and a sender-recipient fingerprint/finger vein conversion device 600b that converts the virtual currency of the sender into the virtual currency of the recipient in addition to the above-described components.

FIG. 18 is a block diagram illustrating execution of a transaction process of a digital virtual currency with a blockchain between parties using the transaction system of the digital virtual currency with the blockchain between the parties according to the present disclosure, and FIG. 19 is a flowchart illustrating the execution of the transaction process of the digital virtual currency with the blockchain between the parties using the transaction system of the digital virtual currency with the blockchain between the parties according to the present disclosure.

In the block diagram illustrating the transaction process of the digital virtual currency with the blockchain between the parties by using the transaction system of the digital virtual currency with the blockchain between the parties of the present disclosure in FIG. 18, an electronic cryptographic source 316 provided from a first file 315a, which is a basic unit of a virtual currency interlocked with general matching program 340a, is converted by the general matching program 340a, and an electronic algorithm source 416 provided from the iris/face algorithm 415b is converted by the general matching program 340a, and thus these electronic algorithm sources 316 and 416 may be fused by the matching program 344 to be traded as a basic unit of transmission.

That is, in a starting step, the digital virtual currency is formed so that iris or face authentication information matches with and is stored in each basic unit of a file of the virtual currency by a matching program 344, and thus, sender's iris or face authentication information may be converted into recipient's iris or face authentication information by a blockchain-based digital virtual currency transaction guidance server 200 and is processed in an iris or face authentication information matching determination step (S130b) of determining, by the sender terminal 300, whether the file of the virtual currency matches the iris or face authentication information.

In a transferring step, the digital virtual currency is formed so that the iris or face authentication information matches with and is stored in each basic unit of the file of the virtual currency by the matching program 344, and thus, the sender's iris or face authentication information may be converted into the recipient's iris or face authentication information by the blockchain-based digital virtual currency transaction guidance server 200 and is processed in a sender-recipient's iris or face authentication information converting step (S210a) of determining, by the blockchain-based digital virtual currency transaction guidance server 200, whether there is a request for converting the sender's iris or face authentication information matching with and stored in the file of the virtual currency into the recipient's iris or face authentication information and converting the sender's iris or face authentication information.

Non-explained reference symbols 315b and 315c denote the number of second and third files of virtual currency following the first file, which is the basic unit of the virtual currency.

Of course, in order to transmit a large amount, it is preferable to propose and operate a batch payment program.

In FIGS. 19A and 19B, since the same matter as the procedure shown in the conventional transmission method is used without change, essential components of the present disclosure will be described without change.

In the reference numerals, reference numerals of the same technical contents as those in the related art are used identically.

First, when the sender-side blockchain-based digital virtual currency transaction app 310 installed on the sender terminal 300 is run (S110), the run sender-side blockchain-based digital virtual currency transaction app 310 controls the stored and managed blockchain-based digital virtual currency transaction screen 510 to be output and displayed through the information output unit 301 of the sender terminal 300 (S120).

In this case, in order to prevent exposure of all pieces of information, it is requested by the iris or face authentication unit to determine whether the electronic cryptographic source of the virtual currency (including a "file name" or a "node" of the virtual currency in which the virtual currency is formed) matches the electronic algorithm source of the iris or face. Here, it is determined whether the virtual currency matches the iris or face authentication information (S130b).

When the above-described conditions are not satisfied, the transaction ends. Thereafter, when the transmission menu 514 is clicked in a state in which the sender inputs the digital virtual currency to the amount display column 511, the instant messenger selection column 512, and the text input column 513 on the displayed blockchain-based digital virtual currency transaction screen 510 through the information output unit 301 according to an input format, the sender-side blockchain-based digital virtual currency transaction app 310 generates a transaction request signal for a sender by collecting the amount information of the digital virtual currency, the optional instant message (IM, hereinafter the same) identification information, and the stored and managed personal information of a sender input to the blockchain-based digital virtual currency transaction screen 510 through the sender-side blockchain-based digital virtual currency transaction app, and transmits the generated transaction request signal to the blockchain-based digital virtual currency transaction guidance server 200 (S130).

Thereafter, when the transaction request signal for the sender is transmitted from the sender terminal 300, the blockchain-based digital virtual currency transaction guidance server 200 generates a URL for recipient recognition (A) that guides to recognize a recipient who is bestowed the digital virtual currency with the blockchain after confirming that the sender is a member by matching the personal information of the sender included in the transaction request signal for the sender with the member list information DB 211 and transmitting the generated URL for recipient recognition (A) to the sender terminal 300 (S140).

Thereafter, in a state in which the sender-side instant messenger corresponding to the optional IM identification information is controlled to be automatically run when the URL for recipient recognition (A) is transmitted from the blockchain-based digital virtual currency transaction guidance server 200, the sender-side blockchain-based digital virtual currency transaction app 310 of the sender terminal 300 controls a URL display guidance screen for a sender-side instant messenger (see FIG. 3B) with the URL for recipient recognition (A) displayed by being inserted into the automatically run sender-side instant messenger to be output through the information output unit 301 (S150).

Thereafter, when the recipient account of the instant messenger for the sender to request the transmission of the URL for recipient recognition (A) is designated by the sender designation guidance screen for the sender-side instant messenger (see FIG. 3C), the sender-side instant messenger of the sender terminal 300 transmits the URL for recipient recognition (A) to the recipient terminal 400 corresponding to the recipient account (S160).

Thereafter, the recipient-side instant messenger of the recipient terminal 400 controls a URL display guidance screen for a recipient-side instant messenger (see FIG. 3D) into which the transmitted URL for recipient recognition (A) is inserted and displayed to be output through the information output unit 401 (S170).

Thereafter, when the URL for recipient recognition (A) displayed on the recipient-side instant messenger of the recipient terminal 400 is clicked, the recipient-side blockchain-based digital virtual currency transaction app 410 is automatically run simultaneously with the click (S180).

The automatically run recipient-side blockchain-based digital virtual currency transaction app 410 of the recipient terminal 400 generates a personal details signal for recipient authentication including personal information of a recipient who is bestowed a digital virtual currency with a blockchain and transmits the generated personal details signal for recipient authentication to the digital virtual currency transaction guidance server 200 (S190).

Thereafter, the blockchain-based digital virtual currency transaction guidance server deducts an amount to be donated to the recipient from the blockchain-based digital virtual currency amount information stored in electronic wallet information of the sender in an electronic wallet list information DB 212 after confirming that the recipient is a member by matching the personal information of the recipient included in the personal details signal for recipient authentication with a member list information DB 211 when the personal details signal for recipient authentication is transmitted from the recipient terminal 400, accumulates the deducted amount in the blockchain-based digital virtual currency amount information stored in the electronic wallet information of the recipient, generates the transaction information for the transaction of the digital virtual currency with the blockchain based on the accumulated amount, and transmits the generated transaction information for the transaction of the digital virtual currency with the blockchain to the designated blockchain holding servers 100 (S200).

In this case, the blockchain-based digital virtual currency transaction guidance server 200 performs a sender-recipient's iris or face authentication information converting step (S210b) of determining whether there is a request for converting a sender of the virtual currency matching the electronic cryptographic source (including the "file name" or the "node" of the virtual currency in which the virtual currency is formed) of the virtual currency and the electronic algorithm source of the iris or face into a recipient by the authentication signal of the iris or face, and converting information thereof.

Thereafter, when the transaction information for the transaction of the digital virtual currency with the blockchain is transmitted, the authentication of the transaction is performed so that each designated blockchain holding server 100 verifies the transmitted transaction information for the transaction of the digital virtual currency with the blockchain to authenticate a blockchain-based digital virtual currency transaction and records the transaction information for the transaction of the digital virtual currency with the blockchain according to the authentication (S210).

Thereafter, the blockchain-based digital virtual currency transaction guidance server 200 transmits a message indicating that the sender terminal 300 has paid the digital virtual currency with blockchain to the recipient.

Thereafter, in the state in which the sender-side instant messenger corresponding to the optional IM identification information is controlled to be automatically run when a message is transmitted from the blockchain-based digital virtual currency transaction guidance server 200, the sender-side blockchain-based digital virtual currency transaction app 310 of the sender terminal 300 controls a payment confirmation guidance screen (see FIG. 3E) for a sender-side instant messenger with the message displayed by being inserted into the automatically run sender-side instant messenger to be output through the information output unit 301.

In addition, in the state in which the recipient-side instant messenger is controlled to be automatically run when the message is transmitted from the blockchain-based digital virtual currency transaction guidance server 200, the recipient-side blockchain-based digital virtual currency transaction app 410 of the recipient terminal 400 controls the accumulative storage guidance screen for the recipient-side instant messenger (see FIG. 3F) in which the message is inserted and displayed in the automatically run recipient-side instant messenger to be output through the information output unit 401.

As another transaction method of bitcoin (same concept as virtual currency), a transaction method of bitcoin (same concept as virtual currency) which is a transaction method of crypto-currency having a blockchain structure in which transmission records made on the network are collected and encrypted and having no issuance subject of currency includes: mining and acquiring the bitcoin (same concept as virtual currency) while authenticating the transaction of the bitcoin (same concept as virtual currency) by running a program installed on a computer that constitutes a bitcoin (same concept as virtual currency) network; generating a member's exchange web wallet address on the crypto-currency exchange server by running a member server installed with a program provided from a crypto-currency exchange server or a program installed on the member computer when the bitcoin (same concept as virtual currency) acquired by being mined and purchased for the transaction of the bitcoin (same concept as virtual currency) with the program run by the computer is transacted by running the program installed on the computer; generating an address of a general wallet of an exchange for the bitcoin transaction on the crypto-currency exchange server through the crypto-currency exchange server equipped with a DB in which transaction details of transacted bitcoin (same concept as virtual currency) by running the program installed on the member server or the member computer are stored; and generating a member's exchange address stored in the crypto-currency exchange server in order to transact the bitcoin (same concept as the virtual currency) by running the program installed on the member server or the member computer.

In this case, the transaction method includes: when the sender-side biometric authentication is requested by the iris and/or face authentication unit for identity authentication before transmitting the bitcoin (same concept as virtual currency), determining whether the iris and/or face authentication is performed.

In this case, it is requested by the iris and/or face authentication unit to determine whether the electronic cryptographic source of the virtual currency (including the "file name" or the "node" of the virtual currency in which the virtual currency is formed) matches the electronic algorithm source of the iris or face. Here, the transaction method includes determining whether the virtual currency matches the iris or face authentication information; in order to quickly process the bitcoin (same concept as a virtual currency) transaction by running the program installed on the member server or the member computer, transmitting the bitcoin (same concept as virtual currency) from a member's exchange web wallet address created on the crypto-currency exchange server to an exchange general wallet address; and confirming the transmission of the bitcoin (same concept as virtual currency) from the member's own exchange web wallet address created on the crypto-currency exchange server to the exchange general wallet address created on the exchange server while the program installed on the crypto-currency exchange server is running.

In this case, the transaction method of bitcoin (same concept as virtual currency) includes: when it is confirmed that the transmission of the bitcoin (same concept as virtual currency) has been made, depositing the bitcoin (same concept as virtual currency) to the exchange address of the member stored by executing the program installed on the crypto-currency exchange server by changing numerical values on the DB installed on the crypto-currency exchange server, not an actual bitcoin (same concept as virtual currency); and when the transaction of the bitcoin (same concept as virtual currency) is completed by changing the numerical values on the DB mounted on the crypto-currency exchange server, offsetting a pre-deposited portion without depositing the bitcoin into a member's DB.

In this case, if necessary, a sender-recipient's iris or face authentication information converting step of determining whether there is a request for converting the sender of the virtual currency matching the electronic cryptographic source (including the "file name" or the "node" of the virtual currency in which the virtual currency is formed) of the virtual currency and the electronic algorithm source of the iris or face into the recipient by the authentication signal of the iris or face, and converting information thereof is performed.

Next, the fingerprint recognition algorithm applied to the conversion device of the present disclosure will be described below.

FIG. 20 is a block diagram illustrating a configuration of a fingerprint recognition device to which an analog processing circuit and a digital processing circuit according to a conventional first invention is applied, FIG. 21 is a block diagram illustrating a configuration of a single chip fingerprint recognition device according to a conventional second invention, FIG. 22 is a block diagram illustrating an implementation example of the single chip of the fingerprint recognition device according to the conventional second invention, and FIG. 23 is an exemplary diagram illustrating a fingerprint recognition comparison using a specific point.

In general, a fingerprint recognition sensor may be an input imaging device that acquires a fingerprint image (or image information of a fingerprint) of a finger representing a characteristic difference unique to each user. Sensing data for the fingerprint image may be acquired by an optical method, a semiconductor type method, an ultrasonic method, a non-contact method, or the like.

An optical fingerprint recognition sensor may include, for example, a prism, a light source, a lens, or a charge-coupled device (CCD). In the optical sensor, when the fingerprint is in contact with the prism, the light source illuminates the prism, the lens collects the light reflected through the prism, and the CCD may acquire the collected light as the fingerprint image.

A semiconductor-type fingerprint recognition sensor may include a thermal sensor, a capacitive sensor, an electric sensor, or the like. The semiconductor-type fingerprint sensor may be miniaturized, and thus, may be used in personal applications.

A thermal sensor may be a fingerprint recognition sensor of a method of acquiring a temperature distribution as a fingerprint image by a temperature difference between a touched portion and a non-touched portion of the fingerprint.

A capacitive sensor may be a fingerprint recognition sensor of a method of acquiring a difference in electric charge or capacitance between ridges of a touched fingerprint as a fingerprint image.

An electric sensor may be a fingerprint recognition sensor of a method of acquiring fingerprint image information from a fingerprint in contact with the sensor or an electric field formed around the fingerprint.

Meanwhile, the fingerprint recognition sensor may be configured to include at least a part of the processor. For example, the fingerprint recognition sensor may include operations such as correcting the fingerprint image or calculating features of the fingerprint image in addition to the operation of acquiring the fingerprint image. In this case, the fingerprint recognition sensor may be a functional module having a hardware module and a software module.

In the fingerprint, there are a normal region composed of ridges with precise directions and a number of other characteristic regions. A point where the ridges progress and break in the feature region is referred to as an ending point, and a point where the ridges break is referred to as a bifurcation. The above ending point and bifurcation are collectively referred to as minutiae of a fingerprint. In general, about 100 to 150 minutiae are distributed on one finger, and the type, position, and direction thereof are different for each person. Accordingly, the location and direction of the minutiae may be used as a unit for determining each fingerprint.

As can be seen from Korean Patent No. 10-0603975, FIG. 19 illustrates a conventional fingerprint recognition device that performs the above-described functions. As illustrated, the conventional fingerprint recognition device includes an analog processing circuit 210 that detects a fingerprint image by converting a difference in capacitance according to a height difference between the ridge and valley of the fingerprint into a voltage and outputting the detected fingerprint image as an electrical signal, and a digital processing circuit 220 that extracts features of the fingerprint image from the signal output from the analog processing circuit 210 and then compares the extracted features with the pre-stored fingerprint data to determine or recognize the user of the detected fingerprint.

In the above, the analog processing circuit 210 may include a sensor plate that converts the difference in capacitance according to a difference in a gap between the ridge and valley of the fingerprint into a voltage, a parasitic capacitance removing circuit that removes a parasitic capacitance generated in the sensor plate and outputs only a sensing voltage, and a comparator that compares the sensing voltage input through the parasitic capacitance removing circuit with a reference voltage Vref and outputs the voltage as a binary signal of '0' or '1.'

In addition, the digital processing circuit 220 includes a digital input unit that receives the output signal of the analog processing circuit 210, a memory unit that stores a plurality of fingerprint images and a fingerprint recognition algorithm, and a microprocessor (MCU) that performs the algorithm stored in the memory unit to perform the detected identity authentication or determination processing.

However, in order to solve the problem that, since the analog processing circuit 210 and the digital processing circuit 222 are implemented on different chips, the conventional fingerprint recognition device of the first invention is large in size, expensive, and difficult to utilize in various fields due to the above-described large volume and high price, the conventional second invention has developed a fingerprint recognition device implemented as a single chip that may be applied in various fields as well as being portable by reducing the volume and unit cost of the product by implementing a sensor side for detecting a fingerprint and a digital processing circuit for recognizing a fingerprint on a single chip.

FIG. 21 is a block diagram of a fingerprint recognition device according to a conventional second invention. The fingerprint recognition device 300 of the present disclosure implemented as the single chip includes: sensors 310 that come in contact with a bottom surface of a user's finger and detect a difference in capacitance between a ridge and a valley of a fingerprint; a microprocessor 320 that performs an algorithm stored in a flash memory 340, receives an electrical signal output from the sensor 310 and performs image processing to extract a feature portion of the fingerprint image, and compares the extracted feature portion with a reference fingerprint image registered in the flash memory 340 to determine whether the extracted feature portion and the reference fingerprint image match; a cache memory 330 that is directly connected to the microprocessor 320 and stores frequently used instructions; the flash memory 340 in which an operating program, a fingerprint recognition algorithm, and fingerprint data are stored; a bus 350 that interconnects the sensor 310, the microprocessor 320, and the flash memory 340 and provides a data path between the respective units; and a bus interface 360 that controls data exchange between the sensor 310, the microprocessor 320, and the flash memory 340 through the bus 350.

As the above-described components, the sensors 310, the microprocessor 320, the cache memory 330, the flash memory 340, the bus 350, and the bus interface 360 are directly integrated on the single chip.

FIG. 22 illustrates an implementation example of the fingerprint recognition device of the conventional second invention. As illustrated, the single chip fingerprint recognition device is implemented as a first chip 400 in which a sensor array 410, an MCU 420, a cache memory 430, a flash memory 440, and a bus interface 450 are integrated.

In the above, the flash memory 440 is an on-chip flash memory implemented on a semiconductor chip and stores a program for implementing the fingerprint recognition algorithm performed by the MCU 420 and also stores a pre-stored fingerprint image or the detected fingerprint image. In addition, the cache memory 430 is a memory having a smaller capacity and faster access speed than the flash memory 440 and is implemented on the same chip as the MCU 420, that is, the first chip 400, and stores frequently used instructions or data to improve the processing speed in the MCU 420.

Further, the sensor array 410 is configured by arranging sensor plates that output the capacitance generated between the touched skin, that is, the skin of the touched finger region as the digital electrical signal, in an m x n matrix and is integrated on the first chip and is connected to other circuits, that is, the MCU 420 or the flash memory 440, by a bus.

The above-described sensor array 410, the MCU 420, the cache memory 430, the flash memory 440, and the bus interface 450 are formed not to be coplanar with each other but may be implemented in multiple layers. That is, the sensor plate of the sensor array 410 is implemented on the surface of the chip, and the remaining MCU 420, the cache memory 430, the flash memory 440, the bus interface 450, and the like may be stacked on the lower layer of the sensor array 410.

In FIG. 23, a technology for comparing and judging the fingerprints using the minutiae of the fingerprint is disclosed in Korean Patent Application Laid-Open No. 10-2015-0034832.

That is, referring to the drawing, a fingerprint image mapping unit may acquire pieces of feature information 812, 822, 832, and 842 of the fingerprint image corresponding to the regions 811, 821, 831, and 841 for each of the regions 811, 821, 831, and 841 of a user's finger. In addition, the fingerprint image mapping unit 260 may map the feature information of the acquired fingerprint image to a part 855 of the user's finger.

For example, the feature information 812 of the fingerprint image 813 corresponding to one region 811 of the fingerprint image of 810 of FIG. 23 may be mapped as the feature information of the fingerprint image corresponding to the first region 851 in 850 of FIG. 23.

In addition, the feature information 822 of the fingerprint image 823 corresponding to one region 821 of the fingerprint image of 810 of FIG. 23 may be mapped as the feature information of the fingerprint image corresponding to the second region 852 in 850 of FIG. 23.

In addition, the feature information 832 of the fingerprint image 833 corresponding to one region 831 of the fingerprint image of 810 of FIG. 23 may be mapped as the feature information of the fingerprint image corresponding to the third region 853 in 850 of FIG. 23.

In addition, the feature information 841 of the fingerprint image 843 corresponding to one region 841 of the fingerprint image of 810 of FIG. 23 may be mapped as the feature information of the fingerprint image corresponding to the fourth region 854 in 850 of FIG. 23. In this case, when there is an overlapping region between the first region 851 to the fourth region 854, the feature information of the fingerprint image corresponding to the overlapping region may include higher quality or more information among the pieces of feature information of the first region 851 to the fourth region 854 or may be preferentially mapped to the recently acquired feature information.

The invention in which the fingerprint image mapping unit maps feature information for each region of the fingerprint image and adjusts the overlapping region to obtain characteristic information of a fingerprint image from a part 855 of a finger as a target is disclosed.

Therefore, the present disclosure is performed in the order of returning a predetermined authentication number from a receiver's side exchange of a personal financial relay transaction server, separating a ridge and a valley of a fingerprint when the fingerprint is touched and transmitting the fingerprint information based on binary data output as a digital electrical signal to a receiving device by allowing a conversion device to convert an arrangement of dual tone multi-frequency (DTMF) signals according to a conversion logic based on the returned predetermined authentication number, and restoring, by the receiving device, the converted DTMF signals to the arrangement of the DTMF signals transmitted by a user according to the conversion logic based on the authentication number used for converting the DTMF signals, and the overlapping description thereof will be omitted.

Next, the fingerprint recognition algorithm applied to the conversion device of the present disclosure will be described.

FIG. 24 is a flowchart illustrating an operation process of a biometric recognition security device according to an embodiment of the present disclosure, FIG. 25 is a diagram for describing setting of a reference point of an effective site when photographing a capillary vessel, and FIG. 26 is a diagram for describing an image segmentation and binarization process of a preprocessor.

In Korean Patent Application Laid-Open No. 2003-0010977, when a finger is inserted, the light generating unit 15 of the image acquisition unit 10 emits infrared light, a laser, or halogen light to a finger and a solid-state image sensor 11 continuously photographs an image between a last node and a nail boundary a plurality of times (S10). In the above, various methods may be applied by recognizing whether a finger is inserted, and it is possible to easily appreciate whether to insert a finger by using an optical sensor using an LED and a light receiving diode, configuring a finger fixture 9 as a limit switch, or installing a manual switch that a user directly presses.

As described above, in order to normalize the image of the photographed finger as a specific site of the finger is photographed, a reference point needs to be set in the preprocessor 20, and since the photographed image of the finger includes a considerable amount of unnecessary parts, the reference point is set, and then these unnecessary images are removed.

That is, as illustrated in FIG. 25, when the center of the nail is taken as the center point, a straight line is drawn down at the same angle and distance as both boundary lines at the central point, and horizontal lines are drawn at the nail boundary so as to be perpendicular to both boundary lines, portions of both boundary lines meeting the horizontal line become reference points A and B for normalization. Accordingly, the tetragonal portion formed between the reference point and the knuckle of the finger becomes an effective site for normalization, and the image of the effective site is rotated and enlarged to be normalized (S11).

Then, in the preprocessor, an effective capillary image is acquired through a smoothing process that removes noise corresponding to the epidermal image or scattered light at the effective site, and the capillary vessel image is binarized into digital data and then is thinned (S12 to S14).

As described above, the thinned capillary vessel image data is output to the feature extractor, and the feature extractor separately performs an image processing process (S15 and S16) of receiving such data and using pattern matching of blood vessels and an image processing process (S17 and S18) of using minutiae.

In the image processing process using the pattern matching, as illustrated in FIG. 8, first, the image screen of the capillary vessel image of the finger acquired through the preprocessor is divided into a plurality of matrix blocks (S15), and the divided capillary vessel image is binarized for each block and output to the recognition controller (S16).

Meanwhile, the image processing process using minutiae analyzes the binarized and thinned capillary vessel image through the preprocessor to extract minutiae such as bifurcations, cut points, branches, transition points, convex and concave vessels of the blood vessels (S17), and measures feature values for positional coordinates, thickness, brightness, and pulsation information of adjacent blood vessels of the minutiae and outputs the measured feature values to the recognition controller (S18). When measuring the brightness of the blood vessel, since a blood flow flowing through the blood vessel constantly changes over time, the average brightness value is taken by analyzing a plurality of consecutive blood vessel images, and the change in brightness is based on the pulsation, so the pulsation may be easily inferred according to the change in brightness.

Subsequently, the recognition controller first detects a plurality of pieces of comparison data corresponding to a tolerance range by directly matching and comparing various types of capillary vessel pattern data recorded in the DB using the binary data related to the blood vessel pattern acquired through the feature extractor (S19) and then compares the minutiae extracted above and its feature values and the minutiae and feature values of a plurality of pieces of comparison data primarily detected to determine and recognize whether they are identical (S20, S21).

The blood vessel pattern information composed of the binary data set according to the presence or absence of the blood vessel image patterns of each pixel is fused by the conversion device to generate a new signal.

Therefore, the present disclosure is performed in the order of returning a predetermined authentication number from a receiver's side exchange of a personal financial relay transaction server, splitting a screen of a capillary vessel image of a finger acquired through a preprocessor into a matrix block and transmitting finger vein information based on binary data output as a digital electrical signal for each block depending on the presence and absence of the split capillary vessel image to a receiving device by allowing a conversion device to convert an arrangement of DTMF signals according to a conversion logic based on the returned authentication number, and restoring, by the receiving device, the converted DTMF signals to the arrangement of the DTMF signals transmitted by a user according to the conversion logic based on the authentication number used for converting the DTMF signals, and the overlapping description thereof will be omitted.

A customer terminal is an integrated terminal with a smart phone, and a fingerprint and/or a finger vein authentication processor is formed on one side of the smart phone or the integrated terminal, and contact-type fingerprint scan modules 2310 and 4310 and optical finger vein authentication device units 2100 and 4100 are each formed on the finger and/or finger vein authentication processor to transmit a signal based on a fused authentication code when the fingerprint or finger vein information is authenticated and then is selectively authenticated with a time difference, that is, when the fingerprint and finger vein information is fused.

Similarly, when applied to a mouse, the signal is transmitted by the fused authentication code.

The fingerprint recognition algorithm applied to the conversion device of the present disclosure will be described below.

FIG. 27 is a block configuration diagram illustrating an iris recognition device using a short-range iris photographing camera according to an embodiment of the conventional iris invention applied to the present disclosure, FIG. 28 is a flowchart for describing an iris recognition method using a short-range iris photographing camera according to an embodiment of the conventional iris invention applied to the present disclosure, and FIG. 29 is a diagram for describing a method of normalizing to binary data in the iris recognition method using the short-range iris photographing camera according to the embodiment of the conventional iris invention applied to the present disclosure.

As illustrated in FIG. 27, an iris recognition device using a short-range iris photographing camera of a smartphone according to an embodiment of the present disclosure includes an iris photographing camera 1, a key input unit 2, a storage unit 4, a controller 3, an output unit 5, and a display lamp 300.

FIG. 27 is a diagram for describing a normalization method using binary data in an iris recognition method using a short-range iris photographing camera.

As disclosed in Korean Patent Application Laid-Open No. 10-214-0133762, the iris photographing camera 1 may improve uniformity of brightness around an iris by installing a prism 200 having an inclined surface and an uneven portion provided on an upper portion of a guide of an illumination infrared (IR) LED 20 to improve iris recognition and block static electricity from being transmitted to an internal device through the illumination IR LED 20, and thus the iris photographing camera 1 can be formed in a compact size.

The key input unit 2 selects whether to register the iris or to recognize the iris through the iris recognition device. The storage unit 4 stores a program for registering and recognizing an iris and iris data for an iris image recognized during registration.

The output unit 5 may output the iris recognition result from the controller 3 so that a peripheral device (not illustrated) may provide various services according to the iris recognition result. The controller 3 operates the iris photographing camera 1 according to the selection of the key input unit 2 to photograph the iris according to the brightness of the lighting, determines whether the iris is a living person's iris through changing of a size of a pupil, and then generates iris data by normalizing an iris image to binary data, thereby storing and registering the iris data for the iris image or performing the iris recognition with the iris data for the iris image stored in the storage unit 4.

The iris information is fused with other signals to be used as a unit for preventing hacking.

In addition, the display lamp 300 is turned on so that the controller 3 operates the iris photographing camera 1 to allow a user to recognize that the iris is being recognized. In this case, the display lamp 300 may subdivide and display the progress through various colors.

As illustrated in FIG. 28, in the iris recognition method using the short-range iris photographing camera of the smartphone according to the embodiment of the present disclosure, when the key input unit 2 selects the iris recognition (S10), the controller 3 operates the iris photographing camera 1 to photograph the iris according to the brightness of the lighting (S22).

In this case, the operating state of the iris photographing camera 1 is displayed through the display lamp 300 so that the user may recognize that the iris photographing camera 1 is being operated. Even when an iris of a person belongs to the same person, as illustrated in the drawing, as the size of the pupil changes according to the brightness of the lighting, the iris pattern also changes.

In the conventional invention, the iris image is acquired while maintaining characteristics that change according to individual characteristics by photographing the iris while changing the brightness of the lighting. As described above, it is determined whether there is the change in the size of the pupil after the iris is photographed according to the brightness of the lighting (S24).

In this case, when there is no change in the size of the pupil, it may be determined as not belonging to a living person, and the subsequent process is skipped and the process ends. When a living human eye is photographed, one iris image is acquired for the iris recognition among the iris images that change as the size of the pupil changes (S26).

As illustrated in FIG. 29 for one acquired iris image, iris data is generated by normalizing each pixel of the photographed iris image to binary data (S28).

That is, the amount of data may be reduced by normalizing iris data to binary data indicating the presence or absence of a pattern regardless of the depth of the iris pattern. Accordingly, the processing speed can be improved to improve the recognition speed, and since the processing is also performed through a system with a low specification, miniaturization and portability can be increased, and the influence of day and night and lighting can be minimized.

The iris data thus generated is compared with iris data for a plurality of iris images obtained by photographing the iris according to the brightness of the lighting stored in the storage unit 4 to compare whether the iris image matches the iris data (S30). Then, the comparison result is output through the output unit 5 so that the peripheral device (not illustrated) may provide various services through the recognition result of the iris (S32).

On the other hand, when the key input unit 2 selects the iris registration, the controller 3 operates the iris photographing camera 1 to photograph the iris according to the brightness of the lighting (S12). In this case, the operating state of the iris photographing camera 1 is displayed through the display lamp 300 so that the user may recognize that the iris photographing camera 1 is being operated.

Even when an iris of a person belongs to the same person, as the size of the pupil changes according to the brightness of the lighting, the iris pattern also changes. In the conventional invention, the iris image is acquired while maintaining characteristics that change according to individual characteristics by photographing the iris while changing the brightness of the lighting.

As described above, it is determined whether there is the change in the size of the pupil after the iris is photographed according to the brightness of the lighting (S14). In this case, if there is no change in the size of the pupil, it may be determined as not belonging to a living person, and the subsequent process is skipped and the process ends.

When a living human eye is photographed, a plurality of iris images are acquired for the iris registration among the iris images that change as the size of the pupil changes (S16). As illustrated in FIG. 12 for a plurality of acquired iris images, the iris data for the plurality of iris images is generated by normalizing each pixel of the photographed iris image to binary data (S18). That is, the amount of data may be reduced by normalizing iris data to binary data indicating the presence or absence of a pattern regardless of the depth of the iris pattern.

Accordingly, the data is composed of the binary data set by being divided into individual pixels and is fused by the conversion device to generate a new signal.

The registration is performed by storing the iris data for the generated plurality of iris images in the storage unit 4 (S20). As described above, according to the iris recognition method using the short-range iris photographing camera of the smartphone according to the present disclosure, the iris image photographed through the short-range iris photographing camera of the smartphone is converted into binary data according to the iris pattern of each pixel, thereby reducing the amount of data to improve the recognition speed and reducing the false recognition rate by changing the pattern and path of the iris, and may be processed by the system with low specification, thereby improving compactness and portability and increasing the recognition regardless of the darkness of the pattern according to day and night and lighting.

Therefore, according to the present disclosure, the iris recognition method is performed in the order of returning a predetermined authentication number from a receiver's side exchange of a personal financial relay transaction server, dividing one iris image into individual pixels and transmitting iris information based on binary data output as a digital electrical signal depending on whether there is an iris pattern in each pixel to a receiving device by allowing a conversion device to convert an arrangement of DTMF signals according to a conversion logic based on the returned predetermined authentication number, and restoring, by the receiving device, the converted DTMF signals to the arrangement of the DTMF signals transmitted by a user according to the conversion logic based on the authentication number used for converting the DTMF signals, and the overlapping description thereof will be omitted.

The application of a binary system to a face image that may be determined by face information applied to the conversion device will be described below.

FIG. 30 is an explanatory diagram of a muscle structure of an eye of the conventional invention applied to the present disclosure, and FIG. 31 is a schematic configuration diagram of a face image of the conventional facial invention applied to the present disclosure and is a configuration diagram illustrating each position and distance measurement method.

In such face recognition, as disclosed in Korean Patent Application No. 10-1174103, as a schematic configuration diagram of the input face image of the conventional invention according to the embodiment of the conventional invention, the measurement of each position and distance is the key.

In an eye and peripheral muscle information detection step applied to the conventional invention, locations of frontalis, corrugator supercilii, levator palpebrae, orbicularis oculi, and depressor supercilii muscle, which are muscle structures of an eye, are grasped, and the periphery of the eye (an eyebrow, an eyelid, a brow, distances between eyes and a nose, distances between eyes and a mouth, and angles of a nose and a mount with respect to eyes) are detected, which is generated as basic information to be used as registration and comparison data, and a preprocessing method for preserving detailed features of a face image is performed.

Thereafter, the conventional invention undergoes preprocessing and feature extraction steps of normalizing a face image according to the eye position and surrounding detailed information, removing and statistically correcting an external illuminance component from the normalized face image, and extracting features from the preprocessed face image.

In this case, the preprocessing and feature extraction step applied to the present disclosure is to compensate for a change in external conditions of luminance, posture, and expression, and the luminance correction uses local localization normalization and local histogram smoothing.

In addition, the data is composed of the binary data set by being divided into individual pixels according to the face image normalization by the minutiae of the eye position and surrounding detailed information and is fused by the conversion device to generate a new signal.

The face recognition method of mathematical pattern analysis based on the upper musculoskeletal structure includes a face image input step of inputting an image input by a camera (USB including CCD) or a video file or image file image, a face detection step of determining whether there is a face in the input image, finding a location thereof, detecting the face from the detected object to determine a basic outline, and automatically finding the location of the face, a step of automatically finding the position of the eye in the detected face region, detecting the detailed information around the eye, and detecting the muscle information around the eye, and a preprocessing and feature extraction step of normalizing the face image by the eye position and the detailed information around the eye, removing and statistically correcting the external illuminance components from the normalized face image, and extracting features from the preprocessed face image.

Here, the face information is composed of the binary data set according to the face image normalization by the eye position and surrounding detailed information and may be used in the conversion device.

Therefore, according to the present disclosure, the face recognition method is performed in the order of returning a predetermined authentication number from a receiver's side exchange of a personal financial relay transaction server, dividing one face image into individual pixels and transmitting the face information based on binary data output as a digital electrical signal to a receiving device by allowing a conversion device to convert an arrangement of DTMF signals according to a conversion logic based on the returned predetermined authentication number, and restoring, by the receiving device, the converted DTMF signals to the arrangement of the DTMF signals transmitted by a user according to the conversion logic based on the authentication number used for converting the DTMF signals, and the overlapping description thereof will be omitted.

A finger vein pattern input device according to the embodiment of the conventional invention applied to the present disclosure will be described below.

FIG. 32 is a view of an exterior of a finger vein pattern input device according to the embodiment of the conventional invention applied to the present disclosure, and FIG. 33 is a cross-sectional view of the finger vein pattern input device of FIG. 32 applied to the present disclosure.

A configuration of a finger vein pattern input device 100 will be described using FIGS. 32 and 33 with respect to the technology described in Korean Patent Laid-Open No. 10-2008-0022202.

A main body 10 is integrated with a built-in finger support 11. Further, a control module unit (control module unit) 1 and an imaging unit (imaging unit) 2 mounted on a camera substrate 9 and having a CPU for performing image processing are provided inside the main body 10. As is well known, the control module unit 1 compares a finger vein pattern extraction unit for extracting the finger vein pattern from the image acquired by the imaging unit 2 and a finger vein pattern registered in advance with the extracted finger vein pattern, that is, an image arithmetic unit for collating.

The imaging unit 2 includes near-infrared light emitting LEDs 13 (13A and 13B) as irradiating unit disposed in a space part 12 formed in the upper portion (vertical left side in the drawing) of the main body 10, and the finger detection unit (not illustrated).

An irradiation window 16 (16A and 16B) is provided in a finger support 11 in a form facing a perforation part 15 (15A, 15B) and the near-infrared light emitting LED 13 installed on the finger support 11. The near-infrared light-emitting LED 13 is disposed in the space part 12, and thus, light is not leaked through any other components other than the irradiation window 16. A camera module 4 having a camera lens 3 and a CCD and an optical axis refractive unit 5 composed of a mirror are provided at a central portion of the inside of the main body 10. The optical axis refracting unit 5 has an inclined mirror so that the overall thickness of the device is reduced to increase an optical path length for imaging, thereby reducing the image distortion. An imaging opening 6 is largely formed in the central portion of the finger support 11, and an imaging window 7 is provided in the imaging opening 6. The imaging window 7 is made of a smoke-like material whose central part is not visible. This material transmits infrared light. The imaging opening 6 has a shape with a depth in which a round R is applied outward so that a finger does not come into contact with the imaging window 7 during the imaging. By implementing such a round R, it is possible to prevent a vein from being crushed by compressing the vein, and it is also possible to improve the visibility of the vein located in the vicinity of the imaging opening. The imaging window 7 is provided perpendicularly to a groove 8 as illustrated in the figure provided in the imaging opening 6.

The light projected through the camera lens 3 is bent by the mirror of the optical axis refracting unit 5 and is irradiated outward as indicated by arrows through the imaging window 7 and the opening 6.

The near-infrared light-emitting LED 13 and the status display LED 17 are arranged in the space part 12.

Moreover, as superior biometric information in all aspects such as resistance to counterfeiting, a false acceptance rate, a false reject rate, a failure to enroll rate, and an authentication time, compared to the above biometric technology, the finger vein authentication technology is known.

By using the related art described above, it may be applied to the implementation system of the present disclosure.

A method of issuing virtual currency by matching the virtual currency with QR/bar code authentication information will be described below.

Hereinafter, an embodiment of the present disclosure will be described in detail with reference to FIGS. 34 and 35.

FIG. 34 is a block diagram of matching a virtual currency with QR/bar code authentication information using a transaction system of a digital virtual currency having a blockchain between parties of the present disclosure, FIG. 35 is a block diagram of another example of FIG. 9 illustrating the execution of the transaction process of the digital virtual currency with the blockchain between the parties using the transaction system of the digital virtual currency with the blockchain between the parties according to the present disclosure, and FIGS. 36A and 36B are flowcharts of FIG. 34 illustrating the execution of the transaction process of the digital virtual currency with the blockchain between the parties using the transaction system of the digital virtual currency with the blockchain between the parties according to the present disclosure.

In FIG. 34, a main controller (CPU) 340 illustrated in the block diagram for matching a virtual currency with biometric authentication information using the transaction system of the digital virtual currency with the blockchain between parties of the present disclosure includes an encrypted virtual currency 315 described above, an encrypted QR/bar code algorithm 415C described above, a sender terminal 300C including a QR/bar code recognizer, and a recipient terminal 400C including the QR/bar code recognizer, and includes a conversion device 500 that matches an electronic cryptographic source (including a "file name" in which a virtual currency is formed or a "node" of a virtual currency) of the encrypted virtual currency 315 with an electronic algorithm source of the QR/bar code algorithm 415C, and a sender-recipient QR/bar code conversion device 600C that converts the virtual currency of the sender into the virtual currency of the recipient in addition to the above-described components.

In the block diagram illustrating the transaction process of the digital virtual currency with the blockchain between the parties by using the transaction system of the digital virtual currency with the blockchain between the parties of the present disclosure in FIG. 35, an electronic cryptographic source 316 provided from a first file 315a (basic unit of encrypted currency), which is a basic unit of a virtual currency interlocked with general matching program 340a, is converted by the general matching program 340a, and the QR/bar code algorithm 415C provided from the fingerprint/finger vein algorithm 415 is converted by the general matching program 340a, and thus these electronic algorithm sources 316 and 416 may be fused by the matching program 344 to be transacted as a basic unit of transmission.

Non-explained reference symbols 315b and 315c denote the number of second and third files of virtual currency following the first file, which is the basic unit of the virtual currency.

In the signal conversion method described above, pieces of signal information formed by binary data set according to the presence or absence of each divided pixel pattern of the QR/bar code is fused to each other by the conversion device to generate a new signal.

Of course, in order to transmit a large amount, it is preferable to propose and operate a batch payment program.

In FIGS. 36A and 36B, since the same matter as the procedure shown in the conventional transmission method is used without change, essential components of the present disclosure will be described without change.

In the reference numerals, reference numerals of the same technical contents as those in the related art are used identically.

First, when the sender-side blockchain-based digital virtual currency transaction app 310 installed on the sender terminal 300 is run (S110), the run sender-side blockchain-based digital virtual currency transaction app 310 controls the stored and managed blockchain-based digital virtual currency transaction screen 510 to be output and displayed through the information output unit 301 of the sender terminal 300 (S120).

In this case, in order to prevent exposure of all pieces of information, it is requested by the QR/bar code authentication unit to determine whether the electronic cryptographic source of the virtual currency (including a "file name" or a "node" of the virtual currency in which the virtual currency is formed) matches the electronic algorithm source of the QR/bar code. Here, it is determined whether the virtual currency matches the QR/bar code authentication information (S130a).

When the above-described conditions are not satisfied, the transaction ends. Thereafter, when the transmission menu is clicked in a state in which the sender terminal 300 inputs the digital virtual currency to the amount display column, the instant messenger selection column, and the text input column on the displayed blockchain-based digital virtual currency transaction screen 510 through the information output unit according to an input format, the sender-side blockchain-based digital virtual currency transaction app 310 generates a transaction request signal for a sender by collecting the amount information of the digital virtual currency, the optional IM identification information, and the stored and managed personal information of a sender input to the blockchain-based digital virtual currency transaction screen 510 through the sender-side blockchain-based digital virtual currency transaction app, and transmits the generated transaction request signal to the blockchain-based digital virtual currency transaction guidance server 200 (S130).

Thereafter, when the transaction request signal for the sender is transmitted from the sender terminal 300, the blockchain-based digital virtual currency transaction guidance server 200 generates a URL for recipient recognition (A) that guides to recognize a recipient who is bestowed the digital virtual currency with the blockchain after confirming that the sender is a member by matching the personal information of the sender included in the transaction request signal for the sender with the member list information DB 211 and transmitting the generated URL for recipient recognition (A) to the sender terminal 300 (S140).

Thereafter, in a state in which the sender-side instant messenger corresponding to the optional IM identification information is controlled to be automatically run when the URL for recipient recognition (A) is transmitted from the blockchain-based digital virtual currency transaction guidance server 200, the sender-side blockchain-based digital virtual currency transaction app 310 of the sender terminal 300 controls a URL display guidance screen for a sender-side instant messenger with the URL for recipient recognition (A) displayed by being inserted into the automatically run sender-side instant messenger to be output through the information output unit 301 (S150).

Thereafter, when the recipient account of the instant messenger for the sender to request the transmission of the URL for recipient recognition (A) is designated by the sender designation guidance screen for the sender-side instant messenger, the sender-side instant messenger of the sender terminal 300 transmits the URL for recipient recognition (A) to the recipient terminal 400 corresponding to the recipient account (S160).

Thereafter, the recipient-side instant messenger of the recipient terminal 400 controls a URL display guidance screen for a recipient-side instant messenger (see FIG. 3D) into which the transmitted URL for recipient recognition (A) is inserted and displayed to be output through the information output unit 401 (S170).

Thereafter, when the URL for recipient recognition (A) displayed on the recipient-side instant messenger of the recipient terminal 400 is clicked, the recipient-side blockchain-based digital virtual currency transaction app 410 is automatically run simultaneously with the click (S180).

The automatically run recipient-side blockchain-based digital virtual currency transaction app 410 of the recipient terminal 400 generates a personal details signal for recipient authentication including personal information of a recipient who is bestowed a digital virtual currency with a blockchain and transmits the generated personal details signal for recipient authentication to the digital virtual currency transaction guidance server 200 (S190).

Thereafter, the blockchain-based digital virtual currency transaction guidance server deducts an amount to be donated to the recipient from the blockchain-based digital virtual currency amount information stored in electronic wallet information of the sender in an electronic wallet list information DB 212 after confirming that the recipient is a member by matching the personal information of the recipient included in the personal details signal for recipient authentication with a member list information DB 211 when the personal details signal for recipient authentication is transmitted from the recipient terminal 400, accumulates the deducted amount in the blockchain-based digital virtual currency amount information stored in the electronic wallet information of the recipient, generates the transaction information for the transaction of the digital virtual currency with the blockchain based on the accumulated amount, and transmits the generated transaction information for the transaction of the digital virtual currency with the blockchain to the designated blockchain holding servers 100 (S200).

In this case, the blockchain-based digital virtual currency transaction guidance server 200 performs a sender-recipient's QR/bar code authentication information converting step (S210b) of determining whether there is a request for converting a sender of the virtual currency matching the electronic cryptographic source (including the "file name" or the "node" of the virtual currency in which the virtual currency is formed) of the virtual currency and the electronic algorithm source of the QR/bar code into a recipient by the authentication signal of the QR/bar code, and converting information thereof.

Thereafter, when the transaction information for the transaction of the digital virtual currency with the blockchain is transmitted, the authentication of the transaction is performed so that each designated blockchain holding server 100 verifies the transmitted transaction information for the transaction of the digital virtual currency with the blockchain to authenticate a blockchain-based digital virtual currency transaction and records the transaction information for the transaction of the digital virtual currency with the blockchain according to the authentication (S210).

Thereafter, the blockchain-based digital virtual currency transaction guidance server 200 transmits a message indicating that the sender terminal 300 has paid the digital virtual currency with blockchain to the recipient.

Thereafter, in the state in which the sender-side instant messenger corresponding to the optional IM identification information is controlled to be automatically run when a message is transmitted from the blockchain-based digital virtual currency transaction guidance server 200, the sender-side blockchain-based digital virtual currency transaction app 310 of the sender terminal 300 controls a payment confirmation guidance screen for a sender-side instant messenger with the message displayed by being inserted into the automatically run sender-side instant messenger to be output through the information output unit.

In addition, in the state in which the recipient-side instant messenger is controlled to be automatically run when the message is transmitted from the blockchain-based digital virtual currency transaction guidance server 200, the recipient-side blockchain-based digital virtual currency transaction app 410 of the recipient terminal 400 controls the accumulative storage guidance screen for the recipient-side instant messenger in which the message is inserted and displayed in the automatically run recipient-side instant messenger to be output through the information output unit.

As another transaction method of bitcoin (same concept as virtual currency), a transaction method of bitcoin (same concept as virtual currency) which is a transaction method of crypto-currency having a blockchain structure in which transmission records made on the network are collected and encrypted and having no issuance subject of currency includes: mining and acquiring the bitcoin (same concept as virtual currency) while authenticating the transaction of the bitcoin (same concept as virtual currency) by running a program installed on a computer that constitutes a bitcoin (same concept as virtual currency) network; generating a member's exchange web wallet address on the crypto-currency exchange server by running a member server installed with a program provided from a crypto-currency exchange server or a program installed on the member computer when the bitcoin (same concept as virtual currency) acquired by being mined and purchased for the transaction of the bitcoin (same concept as virtual currency) with the program run by the computer is transacted by running the program installed on the computer; generating an address of a general wallet of an exchange for the bitcoin transaction on the crypto-currency exchange server through the crypto-currency exchange server equipped with a DB in which transaction details of transacted bitcoin (same concept as virtual currency) by running the program installed on the member server or the member computer are stored; and generating a member's exchange address stored in the crypto-currency exchange server in order to transact the bitcoin (same concept as the virtual currency) by running the program installed on the member server or the member computer.

In this case, the transaction method includes: when the sender-side biometric authentication is requested by QR/bar code authentication unit for identity authentication before transmitting the bitcoin (same concept as virtual currency), determining whether the QR/bar code authentication is performed; when it is requested by QR/bar code authentication unit to determine whether the electronic cryptographic source of the virtual currency (including the "file name" or the "node" of the virtual currency in which the virtual currency is formed) matches the electronic algorithm source of the QR/bar code, determining whether the virtual currency matches the QR/bar code authentication information; in order to quickly process the bitcoin (same concept as a virtual currency) transaction by running the program installed on the member server or the member computer, transmitting the bitcoin (same concept as virtual currency) from a member's exchange web wallet address created on the crypto-currency exchange server to an exchange general wallet address; and confirming the transmission of the bitcoin (same concept as virtual currency) from the member's own exchange web wallet address created on the crypto-currency exchange server to the exchange general wallet address created on the exchange server while the program installed on the crypto-currency exchange server is running.

In this case, the transaction method of bitcoin (same concept as virtual currency) includes: when it is confirmed that the transmission of the bitcoin (same concept as virtual currency) has been made, depositing the bitcoin (same concept as virtual currency) to the exchange address of the member stored by executing the program installed on the crypto-currency exchange server by changing numerical values on the DB installed on the crypto-currency exchange server, not an actual bitcoin (same concept as virtual currency); and when the transaction of the bitcoin (same concept as virtual currency) is completed by changing the numerical values on the DB mounted on the crypto-currency exchange server, offsetting a pre-deposited portion without depositing the bitcoin into a member's DB.

In this case, if necessary, a sender-recipient's QR/bar code authentication information converting step of determining whether there is a request for converting the sender of the virtual currency matching the electronic cryptographic source (including the "file name" or the "node" of the virtual currency in which the virtual currency is formed) of the QR/bar code and the electronic algorithm source of the iris or face into the recipient by the authentication signal of the QR/bar code, and converting information thereof is performed.

A method of applying a QR code to the system or method of the present disclosure will be described below.

FIG. 37 is a schematic configuration diagram of a system for running a communication service and payment method using a recipient (wireless communication) terminal according to the present disclosure, FIG. 38 is a flowchart for describing a payment service subscription step in FIG. 37 in more detail, and FIG. 39 is a flowchart for describing a payment unit providing step in FIG. 37 in more detail.

The present disclosure relates to a communication service and payment method using a recipient (wireless communication) terminal. The payment method includes transmitting, by a communication management and payment management system, a QR (bar) code to the recipient (wireless communication) terminal of a payment service subscriber; storing, by the recipient (wireless communication) terminal, the QR (bar) code and then displaying the QR (bar) code according to the selection of the payment service subscriber; and reading, by a QR (bar) code inquiry machine, the QR (bar) code displayed on the recipient (wireless communication) terminal and inquiring to the communication management and payment management system for service and payment, whereby the operations of telecommunication operators and purchasing and selling operators are unified to log-in to the app while maintaining security and prevent the app from being illegally used by others.

FIG. 37 is a schematic configuration diagram of a system for running a communication service and payment method using a recipient (wireless communication) terminal according to the present disclosure. The system for running a communication service and payment method includes a recipient terminal 30, a QR (bar) code inquiry device 120, and a communication management and payment management system 130. Here, the recipient terminal 30 and the communication management and payment management system 130 are connected to each other through the wireless communication network 140, and the QR (bar) code inquiry machine 120 and the communication management and payment management system 130 are connected to each other through a wired/wireless communication network.

The above payment method refers to a financial transaction payment method by the QR (bar) code (hereinafter the same).

The communication management and payment management system 130 of the present disclosure transmits the unique QR (bar) code of the payment service subscriber to the recipient terminal 30 of the payment service subscriber through the wireless communication network 140, preferably, a short message service (SMS) network, and performs the communication service or the payment service based on the QR (bar) code input from the QR (bar) code inquiry machine 120, and is configured to include the server 131 of the communication service and payment management system and a communication service DB 133 or a payment service DB 135 connected thereto.

The server 131 of the communication management and payment management system includes an operating program for operating the communication management and payment management system 130, and the communication service DB 133 stores various pieces of data for managing a wireless communication service subscriber, and the payment service DB 135 stores various data for managing the payment service subscriber.

The recipient terminal 30 receives the QR (bar) code transmitted from the communication management and payment management system 130 and stores the received QR (bar) code in a designated memory and displays the QR (bar) code stored in the memory when the payment mode is selected.

In addition, the QR (bar) code inquiry machine 120 reads the QR (bar) code displayed on the display device of the recipient terminal 30 described above and performs the inquiry and payment request to the communication management and payment management system 130.

The operation and effect of the communication service and a payment method using the recipient (wireless communication) terminal according to the present disclosure executed in the system configured as described above will be described in detail.

First, as illustrated in the drawing, as the payment service subscription application step, the recipient terminal 30 applies for the wireless communication service subscription with the communication management and payment management system 130 according to the wireless communication service subscriber's payment service subscription request (S311). In this case, the wireless communication service subscriber applies for a payment service subscription by filling out various types of personal information including a phone number and credit information of the recipient (wireless communication) terminal.

Next, as a step of determining whether the recipient terminal is registered, the communication management and payment management system 130 determines whether the recipient terminal 30 of the payment service subscription applicant is registered in advance, and when not registered in advance, the payment service subscription procedure ends (S312 and S313).

As a payment service subscriber file generation step, if the recipient terminal 30 is registered in advance, the communication management and payment management system 130 generates the payment service subscription file in the payment management DB 135 based on the personal information written in the recipient terminal 30 by the payment service subscription applicant (S314).

Next, as a QR (bar) code generation and transmission step, the communication management and payment management system 130 generates QR (bar) code information and transmits the generated QR (bar) code information to the recipient terminal 30 through the SMS network 140 (S315 and S316).

Next, as illustrated in the figure as the payment unit providing step, as a step of receiving and storing the QR (bar) code information, the recipient terminal 30 receives the QR (bar) code information through the SMS network 140 and stores the received QR (bar) code information in the memory (S321 and S322).

Next, as a password inputting step, when the recipient terminal 30 selects the QR use (payment) mode by the operation of the payment service subscriber, the recipient terminal 30 displays a message to input the password on the display device (S323).

As the password inputting step, the payment service subscriber operates the recipient terminal 30 to input the password (S324 to S325).

In this case, the password is pre-registered in the recipient terminal 30 by the payment service subscriber. When the passwords do not match, the recipient terminal 30 does not display the QR (bar) code information and displays a warning that the password does not match (S327).

As the QR (bar) code information displaying step, when the passwords match, the recipient terminal 30 displays the QR (bar) code information stored in the memory on the display device (S326).

Here, when making a financial payment online or offline during a financial transaction, a simple payment may be made using the QR (bar) code (S331).

Next, as the QR (bar) code inquiring step, when the QR (bar) code information stored in the memory in the QR (bar) code information displaying step is displayed on the display device, the QR (bar) code inquiry machine 120 in the recipient terminal 30 may read the displayed QR (bar) code information to inquire about the QR (bar) code to the communication management and payment management system 130.

Next, as the communication service and payment method execution step, the communication management and payment management system 130 checks whether there is a request for changing the sender's QR (bar) code to the recipient's QR (bar) code in the virtual currency transaction procedure in the sender terminal and receives a change approval message from the recipient terminal to indicate that the change request has been received and goes through the authentication procedure (S328 and S329).

Thereafter, the sender terminal will go through a step (S330) of completing the change of the sender's QR (bar) code to the recipient's QR (bar) code.

The scope of protection of the present disclosure is not limited to the description and expression of the embodiments explicitly described above. In addition, it is stated once again that the scope of protection of the present disclosure cannot be limited due to obvious changes or substitutions in the technical field to which the present disclosure belongs.

### [Industrial Applicability]

The present disclosure transacts a digital virtual currency issued by matching the digital virtual currency with a biometric authentication signal and an authentication information signal of a QR (or bar) code, including an issuance method of the digital virtual currency transmitted by interlocking the digital virtual currency with the biometric authentication signal using a biometric unit by fingerprint/finger vein/iris/face recognition sensor and authentication information of QR (or bar) code to prevent a problem of security and hacking when transacting a digital virtual currency with a blockchain, the stability of the transaction between the parties as well as the transparency of the transaction can be ensured by confirming the identities of the parties by avoiding the anonymity of the transaction.

## Claims

1. A digital virtual currency issued by matching the digital virtual currency with a biometric authentication signal, wherein the digital virtual currency is formed so that fingerprint or finger vein authentication information matches with and is stored in each basic unit of a file of the virtual currency by a matching program (344), and thus, sender's fingerprint or finger vein authentication information is converted into recipient's fingerprint or finger vein authentication information by a blockchain-based digital virtual currency transaction guidance server (200),
a sender terminal (300) is configured to determine whether the file of the virtual currency matches the fingerprint or finger vein authentication information, and
the blockchain-based digital virtual currency transaction guidance server (200) determines whether there is a request for converting the sender's fingerprint or finger vein authentication information matching with and stored in the file of the virtual currency into the recipient's fingerprint or finger vein authentication information, and converts the sender's fingerprint or finger vein authentication information.

2. The digital virtual currency of claim 1, wherein the fingerprint or finger vein authentication information is iris or face authentication information using a digital signal.

3. A transaction method of a digital virtual currency issued by matching the digital virtual currency with a biometric authentication signal, which is a transaction method of a crypto-currency with a blockchain structure, in which transmission records performed in a network are collected and encrypted, without a currency issuing subject, the transaction method comprising:
an app or web running step (S110) of running, by a sender terminal (300), an installed sender-side blockchain-based digital virtual currency transaction app (310) or hybrid web according to a sender's selection;
an information output unit displaying step (S120) of controlling the sender-side blockchain-based digital virtual currency transaction app (310) run by the sender terminal (300) to output and display a stored and managed blockchain-based digital virtual currency transaction screen (510) through an information output unit (301);
with respect to the digital virtual currency formed so that fingerprint or finger vein authentication information matches with and is stored in each basic unit of a file of the virtual currency by a matching program (344), and thus, sender's fingerprint or finger vein authentication information is converted into recipient's fingerprint or finger vein authentication information by a blockchain-based digital virtual currency transaction guidance server (200), a fingerprint or finger vein authentication information matching determination step (S130a) of determining, by the sender terminal (300), whether the file of the virtual currency matches the fingerprint or finger vein authentication information;
when a transmission menu (514) is clicked in a state in which the sender terminal (300) inputs the digital virtual currency to an amount display column (511), an instant messenger selection column (512), and a text input column (513) on the displayed blockchain-based digital virtual currency transaction screen (510) through the information output unit (301) according to an input format, a blockchain-based digital virtual currency transaction guidance transmitting step (S130) of collecting, by the sender-side blockchain-based digital virtual currency transaction app (310), amount information of the digital virtual currency, optional instant message (IM) identification information, and stored and managed personal information of a sender input to the blockchain-based digital virtual currency transaction screen (510) to generate a transaction request signal for the sender and transmitting the generated transaction request signal to the blockchain-based digital virtual currency transaction guidance server (200);
a digital virtual currency transaction guidance transmitting step (S190) of generating, by an automatically run recipient-side blockchain-based digital virtual currency transaction app (410) of a recipient terminal (400), a personal details signal for recipient authentication including personal information of a recipient who is bestowed a digital virtual currency with a blockchain and transmitting the generated personal details signal for recipient authentication to the digital virtual currency transaction guidance server (200);
when the personal details signal for recipient authentication is transmitted from the recipient terminal (400), a digital virtual currency transaction information transmitting step (S200) of deducting, by the blockchain-based digital virtual currency transaction guidance server (200), an amount to be donated to the recipient from blockchain-based digital virtual currency amount information stored in electronic wallet information of the sender in an electronic wallet list information DB (212) after confirming that the recipient is a member by matching the personal information of the recipient included in the personal details signal for recipient authentication with a member list information DB (211), accumulating the deducted amount in the blockchain-based digital virtual currency amount information stored in the electronic wallet information of the recipient, generating transaction information for transaction of the digital virtual currency with the blockchain based on the accumulated amount, and transmitting the generated transaction information for the transaction of the digital virtual currency with the blockchain to designated blockchain holding servers (100);
with respect to the digital virtual currency formed so that the fingerprint or finger vein authentication information matches with and is stored in each basic unit of the file of the virtual currency for each basic unit by the matching program (344), and thus, the sender's fingerprint or finger vein authentication information is converted into the recipient's fingerprint or finger vein authentication information by the blockchain-based digital virtual currency transaction guidance server (200), a sender-recipient's fingerprint or finger vein authentication information converting step (S210a) of determining, by the blockchain-based digital virtual currency transaction guidance server (200), whether there is a request for converting the sender's fingerprint or finger vein authentication information matching with and stored in the file of the virtual currency into the recipient's fingerprint or finger vein authentication information, and converting the sender's fingerprint or finger vein authentication information; and
when the transaction information for the transaction of the digital virtual currency with the blockchain is transmitted, a transaction authentication step (S210) of performing authentication of transaction by verifying, by each designated blockchain holding server (100), the transmitted transaction information for the transaction of the digital virtual currency with the blockchain to authenticate a blockchain-based digital virtual currency transaction and recording the transaction information for the transaction of the digital virtual currency with the blockchain according to the authentication.

4. The transaction method of claim 3, further comprising:
after the blockchain-based digital virtual currency transaction guidance transmitting step (S130), when the transaction request signal for the sender is transmitted from the sender terminal (300), a recipient recognition (A) Uniform Resource Locator (URL)transmitting step (S140) of generating, by the blockchain-based digital virtual currency transaction guidance server (200), a URL for recipient recognition (A) that guides to recognize the recipient who is bestowed the digital virtual currency with the blockchain after confirming that the sender is a member by matching the personal information of the sender included in the transaction request signal for the sender with the member list information DB (211), and transmitting the generated URL for recipient recognition (A) to the sender terminal (300);
in a state in which the sender-side instant messenger corresponding to the optional IM identification information is controlled to be automatically run when the URL for recipient recognition (A) is transmitted from the blockchain-based digital virtual currency transaction guidance server (200), a sender-side instant messenger URL display guidance screen outputting step (S150) of controlling, through the sender-side blockchain-based digital virtual currency transaction app (310) of the sender terminal (300), a URL display guidance screen for a sender-side instant messenger with the URL for recipient recognition (A) displayed by being inserted into the automatically run sender-side instant messenger to output through the information output unit (301);
when a recipient account of an instant messenger for the sender to request the transmission of the URL for recipient recognition (A) is designated through a sender designation guidance screen for the sender-side instant messenger, a recipient recognition (A) URL transmitting step (S160) of transmitting, by the sender-side instant messenger of the sender terminal (300), the URL for recipient recognition (A) to the recipient terminal (400) corresponding to the recipient account;
a recipient-side instant messenger URL display guidance screen outputting step (S170) of controlling, by the recipient-side instant messenger of the recipient terminal (400), the URL display guidance screen for the recipient-side instant messenger into which the transmitted URL for done recognition (A) is inserted and displayed to output through the information output unit (401); and
when the URL for recipient recognition (A) displayed on the recipient-side instant messenger of the recipient terminal (400) is clicked, an app auto-running step (S180) of automatically running the recipient-side blockchain-based digital virtual currency transaction app (410) simultaneously with the click.

5. The transaction method of claim 3 or 4, wherein the fingerprint or finger vein authentication information is iris or face authentication information using a digital signal.

6. A digital virtual currency issued by matching the digital virtual currency with a quick response (QR) (or bar) code, wherein the digital virtual currency is formed so that QR (or bar) code authentication information matches with and is stored in a file of the virtual currency in each basic unit by a matching program (344), and thus, sender's QR (or bar) code authentication information is converted into recipient's QR (or bar) code authentication information by a blockchain-based digital virtual currency transaction guidance server (200), a sender terminal (300) is configured to determine whether the file of the virtual currency matches the QR (or bar) code authentication information, and the blockchain-based digital virtual currency transaction guidance server (200) determines whether there is a request for converting the sender's QR (or bar) code authentication information matching with and stored in the file of the virtual currency into the recipient's QR (or bar) code authentication information, and converts the sender's OR (or bar) code authentication information.
